# EUROPEAN PATENT APPLICATION

(11) **EP 4 428 971 A1**
(43) Date of publication of application: **11.09.2024**
(21) Application number: 23220328.1
(22) Date of filing: 27.12.2023
(51) Int. Cl.: H01M 10/04, B65H 5/00, B65H 7/00

(54) **APPARATUS AND METHOD FOR STACKING A SEPARATOR STRIP AND SHEETS OF FOIL, PREFERABLY FOR AN ELECTROCHEMICAL CELL INTENDED FOR PRODUCING BATTERIES**

(30) Priority: 08.03.2023 IT 202300004332
(71) Applicant: G.D S.p.A., 40133 Bologna (BO) (IT)
(72) Inventor: BIONDI, Andrea, 40133 BOLOGNA (BO) (IT); CAMPAGNOLI, Enrico, 40133 BOLOGNA (BO) (IT); CAVAZZA, Luca, 40133 BOLOGNA (BO) (IT)
(74) Representative: Cavallin, Tommaso

(57) **Abstract**

Stacking apparatus and method for stacking a separator strip (NS) and sheets of foil (201, 301) comprising a feeding unit (20) for feeding said separator strip (NS) comprising an outgoing orientation control device (R2) of said separator strip (NS), configured to define an outgoing reference direction (DRU) of said separator strip (NS), a stacking unit (1) comprising a stacking surface (10) for receiving said separator strip (NS) and said sheets of foil, a handling unit (130) for respectively moving said outgoing orientation control device (R2) of said separator strip (NS) and said stacking surface (10), a first and/or a second release assembly of a sheet of foil (200, 300) for releasing at a minimum release distance (DmR) from said stacking surface (10) a first or a second sheet of foil (201, 301) with a condition of substantially zero relative speed.

## Description

The present invention relates to an apparatus for stacking a separator strip and sheets of foil, for example of the type formed by stacking a separator strip alternated with sheets of foil.

The invention is further directed to a method for stacking a separator strip and sheets of foil.

The present invention finds a preferred, although not exclusive, application in the sector of the production of electrochemical cells intended for example for producing pouch-type or prismatic batteries, for the manufacture of which a stacked structure of a separator strip, preferably alternated with sheets of foil is used.

In particular, in the pertinent technical sector, it is known to combine different stacked layers of a separator strip folded on itself with sheets of foil of electrodes, interposed between the different layers, in order to form a structure suitable for being used for the manufacture of an electrochemical cell intended for producing batteries.

An example of apparatus and method for manufacturing batteries by stacking a separator strip alternated with sheets of foil provide for the displacement of a stacking unit by controlled pendulum movement using a servo motor and a speed reducer.

In this description as well as in the claims appended thereto, certain terms and expressions are deemed to have, unless otherwise expressly indicated, the meaning expressed in the following definitions.

By the term "separator strip" is intended to mean to mean any solid product which, within an industrial production line, is presented in the form of an elongated strip or ribbon, i.e. an element in which the longitudinal extension is significantly greater than its transversal extension. This separator strip can be formed by a single strip or ribbon of material, or by several overlapped strips so as to form a multilayer.

The separator strip also has characteristics such as to allow some bending during its advancement along a relative production line.

The separator strip can, for example, be used by overlapping mutually alternated insulating layers so as to form a stacked structure or sandwich for the manufacture of an electrochemical cell.

Furthermore, the term "separator strip" indicates a strip-shaped product that has the characteristic of allowing a form of separation and/or isolation with respect to other parts placed near it.

This separation can take place through physical or chemical characteristics depending on the intended conditions of use.

An example of such a separation characteristic may be represented by an electrically insulating polymeric strip placed in contact with sheets of foil of conductor electrodes.

This specific configuration mentioned is merely an example and not a limitation.

Other embodiments may include polymeric strips with such compliance that the strip can be stacked on itself.

According to some examples, these materials can be polyolefins, including, for example, polyethylene, polypropylene or co-polymers derived from them.

In this context, by the term "to stack" is intended to mean the action adapted to make a structure comprising a plurality of layers of a separator strip folded on itself so as to create a continuous structure adapted to separate or isolate other components interposed between the different levels made of separator material.

By the term "stacked structure" is intended to mean any structure formed by stacking, i.e. by folding on itself, a strip, a ribbon or more generally a strip-shaped article, making different overlapped layers according to their projection or overlap, preferably vertical. It can be seen that this stacked or folded structure is aimed at producing an at least partial separation with respect to potential products interposed between the various layers and does not necessarily require direct contact between the different layers of the strip adopted.

Often this stacked structure is also identified as a "Z-structure" precisely according to the folded shape that the different layers make up.

As mentioned above, this stacked structure can be applied not only in the sector of electrochemical cells but also in other sectors, such as for example in that of the conductors or capacitors within which stacked-shaped structures can be likewise used.

By the term "working path" it is intended to mean a closed path that is travelled by a handling device or similar kinematic element in which the initial point and the end point of the path substantially coincide.

The term "continuous" referred to an expression of motion, is intended to mean an operation that takes place without interruption, without there being a stop or an interruption in the operation in question. In particular, with preferred but not exclusive reference to the feeding or movement of a strip, the term "continuous" indicates that the strip is never stopped during its feeding or movement.

Similarly, by the term "continuous" reference is made to a product, for example the separator strip, which does not provide for interruptions or clear separations in its inside and which therefore presents itself as a single body during the processing steps or use considered.

Furthermore, as previously argued, it is considered that the strip adopted in the different enucleatable steps of the industrial process of interest is preferably a continuous separator strip and that, therefore, this technical solution entails a step of folding this continuous separator strip on itself in order to create at least two overlapped layers of the aforementioned stacked structure, thus emphasizing at least one process difference with respect to technologies adopted in the sequential stacking of individual layers or plurality of previously preformed or pre-cut separator layers (a concept that provides for the simple release of pre-structured architectures and identifiable with the most restrictive meaning of the term "stacking").

By the term "substantially constant" referred to a measurement or quantity, such as for example the angle of displacement of an object during a trajectory thereof, i.e. the angle formed by an object during its displacement, it is intended to mean that this measurement or quantity maintains, over time, a value that preferably varies by a maximum of ±10%, preferably by a maximum of ±5%, even more preferably by a maximum of ±2%.

By the term "direction" reference is made to an identifiable vector having direction and sense according to what is described or represented in the description and any accompanying figures. In other words, in this context when the term direction is used it is meant an oriented direction. In some discussions, the components of a free vector that are its direction, sense and norm or magnitude (or, less properly, scalar modulus) are explained in order to describe them in a more precise and detailed way. More specifically, in this context reference is made to "norm" identifying it as the Euclidean distance between two respectively initial and end points of a distance vector, i.e. the square root of the sum of the squares of its components.

The terms "substantially equal to 0 mm" means a minimized value that may deviate from the exact value of 0 mm by mere dimensional encumbrances of the kinematic mechanisms involved that may vary this condition by a few millimetres.

By the terms "upstream" or "downstream" reference is made to objects or process steps that occur before or after according to a specific sequential flow, respectively. When these terms are referred to the "direction of unwinding of a separator strip", it means that they occur respectively in previous or subsequent steps with respect to the path travelled by the separator strip according to its direction of advancement, starting from an initial release or dispensing element (roll, coil, etc.) up to the stacking surface on which it is stacked.

In this context the term "to unwind" is a synonym for "unwinding".

Yet, in the examples and arguments given, the terms "sheet of foil" can be replaced by "electrode" when the embodiments are referred to applications for electrochemical cells.

With the terms "while following according to at least one component" referred to B following A is meant that the displacement of A is concordant with B, that is, the displacement vector of B and A have a same equal component.

In this context, the terms "same angular orientation in all spatial configurations that may be taken on" mean that a certain arrangement of devices or objects to which a set of vectors specifically oriented in space is uniquely correlable does not change this orientation of the set of vectors regardless of the spatial configurations taken on. In other words, when this condition occurs, the displacement operators applied to this set of vectors only produce permitted translations and not rotations.

By the terms "Y immediately downstream of X" is meant that a device or product Y is sequentially identifiable immediately after X without further interposed devices or products.

By the term "to selectively extend" is intended to mean to modify the extension of an object or of a portion, producing an increase free of pre-imposed geometric constraints or restrictions.

The terms "while said stacked structure (S) is being created" are intended to refer to an action or process condition that occurs during any of the steps comprised in the creation of said stacked structure.

By the term "consistent" referred to the movement of two or more elements, it is intended to mean that these elements perform substantially the same movement and substantially simultaneously. This term is understood as a synonym for integral with a broader meaning with regard to the structural constraints involved.

In other words, two elements that are displaced according to a consistent movement perform an integral movement, as a single body, although not necessarily the one is joined or constrained directly to the other and being, potentially, also related to different units and parts of the apparatus. In fact, it may be provided that the respective handling systems of the two elements are configured, programmed or operated so as to move, when necessary, the two elements together in a coordinated manner. In addition, it can be for example provided to use a temporary constraint, physical or digital, between the two elements which, for example, joins and coordinates them to each other in some process steps, making them move together, and separates them again, making them movable independently of each other.

The term "said deviation angle β greater in an absolute value than 60°" is intended to consider the angles having a value greater than +60° and lower than -60°.

In particular, in this specific context the deviation angle β can be considered as an angle of rotation according to a first (positive) direction or second (negative) direction opposite to the first.

Since, in the preferred embodiments described below, the separator strip frequently changes its orientation in certain tracts of the process, this deviation angle appears to be useful to clearly represent the conditions in which the strip is rotated in one direction or the opposite direction.

Clearly, the considerations formulated for the expression relative to 60° apply similarly to other angle values for which the same formulation has been expressed (i.e. 70°, 80°).

It should also be noted that by the expression "to displace an object between a first position and a second position" it is meant both the displacement from the first position to the second position and the displacement from the second position to the first position.

This definition applies in an analogous way to similar expressions of motion, such as for example to transfer or to move a generic object between two positions or between two zones or even between two different operative configurations.

The Applicant, in the context of the constant need to increase the performance and the efficiency of the production processes, has preliminarily observed how, in a production line for the creation of a stacked structure suitable for use in the creation of an electrochemical cell intended for producing batteries, the speed of advancement of a separator strip and the following positioning of sheets of foil of electrodes with respect to the unit that performs the stacking thereof can constitute a significant element of limitation of the production capacity of the line itself.

Moreover, this limitation is even more critical in the event that high precision is required in the formation of the stacked structure.

In particular, the Applicant has observed that in many applications, such as for example in the sector of the production of electrochemical cells, high precision must be guaranteed in the geometry of the stacks and in the steps of positioning the sheets of foil of electrodes between one stacked layer and another in order to guarantee the performance required of the finished product.

Furthermore, the Applicant has previously observed that in the aforementioned production line for the creation of a stacked structure it is necessary to fold up to 180° a layer of separator strip in order to produce a subsequent one thereof overlapped and vertically aligned with the previous one on which a specific sheet of foil of electrode can be housed.

The Applicant has observed that the separator strip is then made to displace and change angular orientation significantly during the creation steps of the stacked structure, producing over time a complex evolution of the direction of advancement of the separator strip along the entire feeding line up to the predetermined stacking surface.

Moreover, thanks to targeted studies and in-depth studies, the Applicant has observed that such rapid displacements in space and variations in the angular orientation of the separator strip during the stacking process can produce significant damages to the strip itself.

The Applicant has in fact observed that when the unwinding direction of the separator strip changes over time, conditions of asymmetry of the fluid-dynamic lateral pressures acting on the advancing separator strip can be created.

The Applicant has internally identified and named this phenomenon with the terms "sail effect".

The Applicant has observed that such asymmetrical conditions of the sail effect can produce significant both microscopic and macroscopic deformations in the structure of the separator strip thus introducing a potentially critical step of damage to the essential material for the creation of the stacked structure.

Moreover, the Applicant has observed that such micro and macro-deformations of the structure of the separator strip can lead to the formation of unwanted states of tension, risking even creating breaks in the strip, or states of loss of tension, even localised, which can lead to the creation of folds and wrinkles potentially compromising the efficient alignment of the various layers and the correct contact between the stacked surfaces. Furthermore, the Applicant has observed that these problems correlated to the damage of the structure of the separator strip and/or the creation of nonconstant and uniform states of tension with significant irregularities in the contact surfaces made can be critically significant in the specific case of application in the electrical field wherein the desired conditions of insulation or contact between different parts must be absolutely guaranteed. The Applicant has observed that this harmful operative condition produced on the separator strip is correlated to the speed of advancement, and therefore of displacement in space, of the separator strip itself during the unwinding and stacking steps.

Furthermore, the Applicant has observed that the step of releasing the sheets of foil of electrodes on the separator strip identifies a further criticality of the processes adopted in the state of the art, since it provides that the stacking surface reaches predetermined stop positions during which the feeding of the strip and/or the movement of the stacking surface are stopped.

This condition produces a slowdown in the production process with an increase in the manufacture timings of the desired stacked structures.

Even more so, these technical solutions require abrupt accelerations and decelerations of the kinematic mechanisms involved, making the damages that the sail effect can cause during these stop and restart steps even more significant.

The Applicant has therefore perceived how it is possible to increase the stacking speed of the separator strip compared to known solutions by cancelling the stops provided for the release of the sheets of foil of electrodes and by significantly reducing or avoiding the production of damages to the separator strip during the formation of the stacked structure linked to the sail effect.

Finally, the Applicant found that by providing a specific and consistent movement of a release assembly of a sheet of foil with respect to the stacking surface, it was possible to avoid the necessary stops.

Thanks to these characteristics, the release of the sheets of foil of electrodes and the stacking step of the separator strip can advance at increased unwinding and stacking speeds, overcoming the limitations in process speeds that can be adopted with the solutions of the known art.

In a first aspect thereof, therefore, the present invention is directed to a stacking apparatus preferably for stacking a separator strip and sheets of foil.

Preferably, the apparatus comprises a stacking unit.

Preferably, the stacking unit comprises a stacking surface.

Preferably, the stacking surface is configured to receive said separator strip and said sheets of foil. Preferably, the apparatus comprises a feeding unit.

Preferably, the feeding unit is configured to feed said separator strip along a feed path.

Preferably, the feeding unit comprises an outgoing orientation control device.

Preferably, the outgoing orientation control device is placed directly upstream of said stacking unit.

Preferably, the outgoing orientation control device is configured to define an outgoing reference direction of said separator strip.

Preferably, the apparatus comprises a handling unit comprising a first and/or a second handling device.

Preferably, said first and/or said second handling device are/is configured to respectively move said outgoing orientation control device and said stacking surface.

Preferably, said second handling device of said stacking surface is configured to displace said stacking surface along a second working path so as to stack said separator strip at said stacking surface.

Preferably, said apparatus comprises a first and/or a second release assembly of a sheet of foil.

Preferably, said first and/or second release assembly of a sheet of foil are configured to release, at a minimum release distance from said stacking surface on a portion of said separator strip at said stacking surface, a first or a second sheet of foil with a condition of substantially zero relative speed between said first and/or said second release assembly of a sheet of foil and said stacking surface during a displacement along said second path.

The Applicant has found that thanks to these characteristics it is possible to achieve a release of the sheets of foil in a controlled and precise manner on a desired portion of the separator strip without having to stop the ongoing process and guaranteeing high performance conditions.

Based on a second aspect, the present invention also refers to a method for creating a stacked structure of a separator strip, preferably for an electrochemical cell intended for producing batteries.

Preferably, said stacked structure being made by folding a separator strip.

Preferably, said method comprises arranging a feeding unit configured to feed a separator strip along a feed path, said feeding unit comprising an outgoing orientation control device of said separator strip.

Preferably, said method comprises arranging a stacking unit comprising a stacking surface.

Preferably, said method comprises arranging a handling unit comprising a first handling device configured to displace said outgoing orientation control device.

Preferably, said method comprises arranging said handling unit comprising a second handling device configured to displace said stacking surface along a second working path.

Preferably, said method comprises arranging a first and/or a second release assembly of a sheet of foil comprised in said apparatus.

Preferably, said method comprises performing an approaching movement of said first or second release assembly of a sheet of foil with respect to said stacking surface during a receiving tract of said second working path, said approaching movement being configured so as to produce a condition of substantially zero relative speed between said first and/or second release assembly of a sheet of foil and said stacking surface.

Preferably, said method comprises performing said approaching movement and/or said receiving tract so as to bring said first or second release assembly of a sheet of foil to a minimum release distance from said stacking surface on a portion of said separator strip at said stacking surface.

Preferably, said method comprises releasing a first and/or second sheet of foil by means of said first and/or second release assembly of a sheet of foil at said minimum release distance on said portion of said separator strip at said stacking surface.

Also based on this aspect it is possible to achieve the same advantages described in relation to the previous aspect.

The present invention, in at least one of the aforesaid aspects, may have at least one of the further preferred features indicated below.

Preferably, said first and/or second release assembly of a sheet of foil is configured to release, at said minimum release distance from said stacking surface, said first and/or second sheet of foil upon an approaching movement of said first or second release assembly of a sheet of foil with respect to said stacking surface during a receiving tract of said second working path, said approaching movement being configured so as to produce said condition of substantially zero relative speed between said first and/or second release assembly of a sheet of foil and said stacking surface during a displacement along said second path.

In this way it is possible to achieve an ideal approaching movement to achieve the condition of substantially zero relative speed and thus allow an effective release of the first and/or second sheet of foil.

Preferably, said receiving tract (TR) and/or said approaching movement (Mac) have/has at least one displacement component parallel to said outgoing reference direction (DRU), preferably perpendicular to said stacking surface (10), even more preferably vertical.

In this way it is possible to perform the desired movements in a compact and effective way.

Preferably, the receiving tract and/or said approaching movement comprise/comprises a purely vertical displacement tract.

In this way, during the approach and/or release step there is no horizontal inertial component that intervenes on the sheet of foil and therefore it is possible to achieve the desired release in a simple and very precise manner.

Preferably, said first and/or second release assembly of a sheet of foil comprises corresponding first and/or second displacement device configured to selectively displace said first and/or second release assembly of a sheet of foil according to said approaching movement.

In this way, it is possible to displace the first and/or second release assembly of a sheet of foil in a separate and independent manner according to needs.

Preferably, said first and/or second displacement device are kinematic mechanisms with two degrees of freedom, more preferably a composition of a horizontal guide and a vertical guide.

In this way it is also possible to effectively follow the complex movements of the stacking surface according to the second working path, still being able to perform the consistent approaching movement in a precise manner.

Preferably, said feeding unit comprises a first orientation control device and said output orientation control device
of said separator strip, comprised in or acting on said feed path, and positioned with respect to each other respectively upstream and downstream in an unwinding sequence of said separator strip so as to identify at least one accumulation tract of said separator strip between said first orientation control device and said outgoing orientation control device.

Preferably, said outgoing orientation control device is placed directly upstream of said stacking unit.

Preferably, said second handling device is configured to displace said stacking surface along said receiving tract of said second working path so as to approach it to said first and/or second handling device during said approaching movement.

Thanks to this technical solution, it is possible to reduce the approaching timings and increase the relative speed in the approaching step between the stacking surface and the first or second release assembly of a sheet of foil.

According to a further embodiment, said second handling device is configured to displace said stacking surface along said receiving tract of said second working path so as to displace it away from said first and/or second handling device during said approaching movement Mac, said approaching being performed by means of a difference in the displacement speed between said stacking surface and said first or second release assembly of a sheet of foil.

In this way, an approach between the stacking surface and the first or second release assembly of a sheet of foil that allows a release to take place in a less abrupt or sudden manner can be performed. In other words, in this way one there is more time to perform the alignment effectively and make the release of the sheet of foil in a more delicate way, thus minimizing possible damages to the separator strip.

Preferably, said first and said second handling device are configured to respectively move said outgoing orientation control device and/or said stacking surface so as to maintain a first distance between said outgoing orientation control device and said stacking surface.

Preferably, the first distance is measured according to said outgoing reference direction.

Preferably, the first distance is comprised between 0 and 30 mm, more preferably between 0 and 15 mm, even more preferably substantially equal to 0 mm.

The Applicant has found that thanks to these characteristics it is possible to maintain a sufficiently contained distance between the outgoing orientation control device and the stacking surface. This distance must take into account the dimensional dimensions of the kinematic mechanisms involved.

In this way it is possible to reduce to the maximum the sail effect on the tract of strip comprised downstream of the outgoing orientation control device by reducing the extension of this tract. In fact, the Applicant has found that, if it is necessary to significantly vary the angular orientation of the separator strip to be stacked, it is possible to act downstream of the outgoing orientation control device by reducing the amount of separator strip that can be exposed to variations in orientation and therefore to the conditions of asymmetry of the fluid-dynamic lateral pressures. In this way it is possible to significantly reduce or cancel the damages caused by the sail effect.

Furthermore, the Applicant has realized that it is possible to increase or reduce the longitudinal length of the separator strip, corresponding to a winding action of the separator strip, and that these actions produce a sail effect only when combined with an angular variation.

In other words, the Applicant has achieved a technical solution by defining a first distance between the outgoing orientation control device and the stacking surface sufficiently contained so as to place constraints relatively to the displacements having components parallel to the direction of the first distance, while greater freedom of movement is obtained when the displacements take place in the directions close to a condition of perpendicularity to the outgoing reference direction of the strip from the outgoing orientation control device.

Preferably, said method comprises arranging a movable stacking surface and defining a second working path.

Preferably, said method comprises stacking said separator strip at said stacking surface.

Preferably, said stacking of said separator strip takes place by maintaining a first distance between said outgoing orientation control device and said stacking surface, measured according to said outgoing reference direction of said separator strip, comprised between 0 and 30 mm, more preferably between 0 and 15 mm, even more preferably substantially equal to 0 mm.

Similarly to what was previously argued, thanks to the present invention relating to the method adopted, it is possible to maintain a sufficiently contained distance between the outgoing orientation control device and the stacking surface, thus minimizing the sail effect on the strip tract included downstream of the outgoing orientation control device by reducing the extension of this tract.

Preferably, said first distance is substantially constant for at least 40%, more preferably for at least 50%, more preferably for at least 80%, even more preferably for 100% of the time of said second working path.

In this way it is possible to effectively reduce the sail effect for a significant portion of the operative steps correlated to the unwinding and stacking step of the separator strip while maintaining the first distance constant over time and equal to a predetermined value. Additionally, it is possible to provide contained variations of this first distance specifically aimed at producing further benefits without compromising the tension state or inducing damages to the separator strip to be stacked allowing a high process speed.

Preferably, said feeding unit comprises a first orientation control device comprised in said feed path.

Preferably, said first orientation control device is positioned upstream, with respect to a winding direction of said separator strip, of said outgoing orientation control device so as to identify at least one accumulation tract of said separator strip between said first orientation control device and said outgoing orientation control device.

Preferably, said first handling device is configured to displace said outgoing orientation control device between
- an approached configuration, wherein said outgoing orientation control device is at a minimum distance from said first orientation control device, said minimum distance being measured according to the length of said separator strip when it is comprised between said first orientation control device and said outgoing orientation control device, and
- an extended configuration, wherein said outgoing orientation control device is at a maximum distance from said first orientation control device, said maximum distance being measured according to said length of said separator strip when it is comprised between said first orientation control device and said outgoing orientation control device.

Preferably, said first handling device is configured to displace said outgoing orientation control device so as to maintain a same angular orientation in all the spatial configurations that said separator strip may take on which are comprised between said approached configuration and said extended configuration at said accumulation tract.

Preferably, said first handling device is configured so that the only part of said separator strip downstream of said outgoing orientation control device that varies angular orientation while said stacked structure (S) is being created of said separator strip is an end tract defined downstream of said outgoing orientation control device and upstream of a first constraint position and/or a second constraint position of said separator strip with respect to said stacking surface.

Thanks to this technical solution, it is possible to have a desired accumulation of separator strip to be used according to process needs, allowing the tension of the separator strip to be kept constant and ensuring that the sail effect is cancelled in the accumulation tract upstream of the outgoing orientation control device and minimized or avoided in the tract downstream of the outgoing orientation control device. In this way, the separator strip can be stacked on the stacking surface, minimizing the damages caused on the separator strip by the sail effect, keeping the tension on the separator strip constant and ensuring the desired precision of creation of the stacked structure.

Preferably, said end tract is oriented according to a deviation direction, identifiable immediately downstream, with respect to said unwinding direction of said separator strip, of said outgoing orientation control device.

Preferably, said deviation direction defines a deviation angle with respect to said outgoing reference direction.

Preferably, said handling unit is configured to displace said outgoing orientation control device with respect to said stacking surface by defining a second distance between said outgoing orientation control device and said stacking surface.

Preferably, said second distance is defined so as to:
- Reduce said second distance to the minimum when said deviation angle is comprised between + 80° and -80°, and/or
- Selectively extend said second distance when said deviation angle is comprised between + 81° and +100° or - 81° and -100°.

Thanks to this solution, it is possible to acquire greater freedom and adaptability or modularity of the process, possibly also modifying the extension of the end tract of the separator strip without producing significant contributions by the sail effect, maintaining a high process speed and guaranteeing a constant tension of the separator strip.

Preferably, when said deviation angle is comprised between + 80° and -80° said second distance is substantially equal to said first distance.

In this way, the end tract of separator strip is maintained as contained as possible when said strip must significantly vary the angular orientation, that is, when the value of the deviation angle varies, in order to reduce or cancel the sail effect that can be potentially generated.

Preferably, when said deviation angle is comprised between + 81° and +100° or - 81° and -100° said second distance is comprised between 0% and 10% of a maximum length comprised between said first constraint position and said second constraint position.

Thanks to this technical solution, it is possible to further vary the extension of the end tract, also depending on specific formats of the stacked structure to be created or to avoid any interferences of the kinematic mechanisms provided in the apparatus.

Preferably, when said deviation angle is substantially equal to +90° or -90°, said first distance varies
- when approaching said stacking surface, from said constant value of a value comprised between said first distance and 200% of said first distance, or
- when moving away from said stacking surface, from said constant value to a value comprised between said first distance and 200% of said first distance.

In this way it is possible to displace the stacking surface beyond the condition of perpendicularity with respect to the outgoing reference direction, thus leading the end tract portion of the separator strip that is overlapped on the stacking surface to an improved abutment on it, thus increasing the precision in the creation of the stacked structure, alternatively it is possible to increase the extension of the end tract so as to be able to more effectively avoid possible interactions between the kinematic mechanisms involved.

For further clarity, an approaching displacement identifies a mutual displacement that starts by reducing the value of the distance between the outgoing orientation control device and the stacking surface. It is to be understood that, when the amount of approaching displacement is equal to 100% of the first distance, the actual distance present between the outgoing orientation control device and the stacking surface becomes equal to zero, while when the amount of approaching displacement is greater than 100% of the first distance, it is understood that the actual distance present between the outgoing orientation control device and the stacking surface starts growing again maintaining the same approaching direction, when the amount of approaching displacement is equal to 200% of the first distance the outgoing orientation control device is located on the opposite side of the stacking surface with respect to the initial configuration corresponding to the first distance, so that the distance between the outgoing control device and the stacking surface takes on a value equal to 100% of said first distance, but on the opposite side with respect to the stacking surface.

Preferably, said first constraint position and/or said second constraint position of said separator strip with respect to said stacking surface are/is a point wherein said separator strip is constrained respectively by means of a first and/or second blocking device comprised in said stacking unit at said stacking surface.

In this way it is possible to constrain and precisely define the portions of the end tract of the separator strip to be stacked in order to create the desired stacked structure. At the same time, thanks to the definition of the end tract of the constraint point, it is possible to manage and minimize the portion of separator strip potentially exposed to asymmetrical conditions of lateral fluid-dynamic pressures that produce the sail effect.

According to preferred embodiments, the first and/or the second blocking device are grippers or suction cups or electromagnetic systems adapted to selectively retain a portion of the separator strip integrally with the stacking surface.

In this way it will be possible to reversibly constrain the desired portion of the end tract according to predetermined time sequences at different points.

According to embodiments, the stacking surface has a substantially planar development with a substantially rectangular base. It can be sized according to the desired formats of stacked structure to be created.

Preferably, the first and/or the second blocking device are constrained with permitted coplanar translation with respect to the stacking surface.

In other words, the first and/or the second blocking device are constrained with respect to the stacking surface with a variable fixing position in the direction of the distance between them.

In this way it will be possible to easily and quickly adapt the desired format of stacked surface according to the stacking surface adopted.

Preferably, the first and/or the second blocking device are constrained with permitted perpendicular translation with respect to the stacking surface.

Thanks to this technical solution, it will be possible to constrain the separator strip more effectively with respect to the stacking surface as the creation of the stacked structure proceeds.

Preferably, said outgoing orientation control device comprises a pair of rollers.

Thanks to this technical solution, it is possible to guide the separator strip in a facilitated manner according to the variation of the deviation angle, thus minimizing the potential damages.

Preferably, said pair of rollers are facing and designed so as to pass said separator strip between them.

In this way it is possible to guide the separator strip more effectively according to the desired outgoing reference direction.

Preferably, said pair of facing rollers have equal diameters and are idle or placed in controlled rotation around a central axis of rotation thereof by movement through direct or transferred motorisation via strips, chains or similar technical solutions.

In this way it is possible to avoid inducing surface deformations and guide the transit of the separator strip effectively, further achieving the possibility of moving the separator strip locally with respect to the feed rate upstream of them.

Preferably, said first orientation control device is a preferably idle roller.

In this way it is possible to precisely guide the separator strip along said feed path.

Preferably, said apparatus comprises a first and/or a second release assembly of a sheet of foil.

Preferably, said first and/or second release assembly of a sheet of foil are configured with respect to said second handling device to release, at a minimum release distance from said stacking surface on a portion of said separator strip at said stacking surface, a first or a second sheet of foil upon an approaching movement of said first or second release assembly of a sheet of foil with respect to said stacking surface during a receiving tract of said second working path.

Preferably, said approaching movement is configured so as to produce a condition of substantially zero relative speed between said first and/or a second release assembly of a sheet of foil and said stacking surface and having at least one displacement component parallel to said outgoing reference direction, preferably perpendicular to said stacking surface, even more preferably vertical.

In this way, it is possible to manage the construction of the stacked structure with the sheets of foil of electrodes interposed between the layers of separator strip, optimizing the alignment of the sheets of foil during the release step in order to be able to obtain the desired electrochemical cell in a precise and efficient manner.

In particular, when the release takes place with an approaching movement with vertical component, more preferably purely vertical, it is avoided that there are possible undesired horizontal displacements and in this way it is possible to produce a release and transfer of the sheet of foil that is further more precise and reproducible.

Preferably, said end tract is oriented according to said deviation direction, identifiable downstream of said outgoing orientation control device, and defining a deviation angle with respect to said outgoing reference direction.

Preferably, said first handling device and said second handling device are configured to produce a relative displacement between said stacking surface and said outgoing orientation control device so as to maintain substantially constant a same deviation angle with respect to said outgoing reference direction for a variation of extension of said end tract preferably comprised between 10 and 100%, more preferably between 20% and 90%, even more preferably between 40 and 60% of a maximum length comprised between a first constraint position and a second constraint position of said separator strip with respect to said stacking surface.

The Applicant has found that thanks to these characteristics it is possible to maintain a constant angular orientation between the outgoing orientation control device and the stacking surface during the unwinding and/or stacking steps so that the sail effect is not produced on the separator strip since the condition of angular variation prodromal to the creation of the asymmetric conditions of lateral fluid-dynamic pressures on the separator strip disappears.

Preferably, said relative displacement occurs when said deviation angle is comprised between + 81° and +100° or - 81° and -100°.

In this case, the variation of the extension of the end tract of the separator strip occurs in a condition of substantial perpendicularity with respect to the outgoing reference direction of the separator strip from the outgoing orientation control device, thus allowing to obtain a variation of a desired amount of separator strip that is usable, for example, to more effectively avoid dimensional encumbrance problems of other nearby kinematic mechanisms.

According to other embodiments, said relative displacement occurs when said deviation angle is substantially equal to 0°.

Thanks to this technical solution, it is possible to perform the unwinding of the separator strip while maintaining the same angular orientation given by the outgoing orientation control device, thus further reducing the damages and the deformations that the separator strip could undergo.

Preferably, said second handling device is configured to move with a continuous movement said stacking surface along said second path defining a closed curve.

In this way, it is possible to carry out a process that never provides for stops, thus optimizing the completion timings of the stacked structure for the electrochemical cell, avoiding any abrupt brakings and accelerations of the various working units concerned that would reduce the average life of use thereof and always keeping the separator strip in constant tension.

Preferably, said first handling device is configured while following according to at least one component said second handling device when it displaces with continuous movement said stacking surface.

In this way it is possible to predict that the accumulation tract is modified according to the movements of the stacking surface by providing a desired additional quantity of separator strip to be used for the displacements in which the solutions according to the state of the art necessarily provide for stops.

In other words, this solution allows to avoid interruptions in the feeding and movement of the separator strip that could generate unwanted tension states or in any case decrease the productivity of the apparatus.

Preferably, said method comprises the feature wherein said first distance is substantially constant for at least 40%, preferably for at least 50%, more preferably for at least 80%, even more preferably for 100% of the time of said second working path.

In this way, as previously argued, it is possible to effectively reduce the sail effect for a significant portion of the process steps correlated to the unwinding and stacking action of the separator strip while maintaining the first distance constant over time and equal to a predetermined value. Furthermore, it is possible to provide predetermined and limited variations of this first distance specifically aimed at producing further benefits without compromising the tension state or inducing damages to the separator strip to be stacked while still ensuring a high overall process speed.

Preferably, when said first handling device mutually displaces said first orientation control device and said outgoing orientation control device from the approached configuration to the extended configuration, said deviation angle varies between + 80° and -80°, while when said first handling device mutually displaces said first orientation control device and said outgoing orientation control device from the extended configuration to the approached configuration, said deviation angle varies between + 81° and +100° or - 81° and -100°.

In this way, the mutual following step in the different spatial configurations of the apparatus is optimized.

Preferably, said approaching movement, and preferably the consequent release of said first and/or second sheet of foil, occurs when said deviation angle is comprised between + 81° and +100° or - 81° and -100°.

In this way it is possible to carry out the release step of the first and/or second sheet of foil on the conveyor belt without ever stopping the feeding of the strip itself.

Preferably, said method comprises arranging an end tract of said separator strip oriented according to a deviation direction, identifiable immediately downstream of said outgoing orientation control device, and defining a deviation angle with respect to said outgoing reference direction.

Preferably, said method comprises mutually displacing said outgoing orientation control device and/or said stacking surface by defining a second distance between said outgoing orientation control device and said stacking surface.

Preferably, mutually displacing said outgoing orientation control device and/or said stacking surface takes place so as to
- Reduce said second distance to the minimum when said deviation angle is comprised between + 80° and -80°, and/or
- Selectively extend said second distance when said deviation angle is comprised between + 81° and +100° or - 81° and -100°.

Thanks to this solution, the adoptable method gives greater freedom and adaptability or modularity of the process, optionally allowing also the extension of the end tract of the separator strip to be varied if necessary without producing significant contributions to the sail effect, maintaining a high process speed and guaranteeing a constant tension of the separator strip.

Preferably, said method comprises the feature wherein when said deviation angle is comprised between + 80° and -80° said second distance is substantially equal to said first distance.

In this way, the end tract of the separator strip is maintained as contained and compact as possible when said strip must significantly vary the angular orientation, so as to reduce or cancel the sail effect that can be potentially generated.

Preferably, said method comprises the feature wherein when said deviation angle is comprised between + 81° and +100° or - 81° and -100° said second distance is comprised between 0% and 10% of a maximum length comprised between a first constraint position and a second constraint position of said separator strip with respect to said stacking surface.

In this way, it is possible to further vary the extension of the end tract, also depending on specific formats of the stacked structure to be created and/or to avoid any interferences of the kinematic mechanisms provided in the apparatus.

Preferably, said method comprises arranging a handling unit comprising a first and/or a second handling device which are/is configured to respectively move said outgoing orientation control device and/or said stacking surface.

In this way, the desired movements are managed by means of a handling unit configured to be able to act simultaneously on a portion of the feeding unit and/or on a portion of the stacking unit in order to be able to optimize the relative displacements in an effective and precise manner.

Preferably, said method comprises arranging a first and/or a second release assembly of a sheet of foil configured to release a first and/or a second sheet of foil on a portion of said separator strip at said stacking surface upon an approaching movement between said first or second release assembly of a sheet of foil and said stacking surface to a minimum release distance with said separator strip.

Preferably, said approaching movement and/or said receiving tract have/has at least one displacement component parallel to said outgoing reference direction, preferably perpendicular to said stacking surface, more preferably vertical. In this way it is possible to perform the desired movements in a compact and effective manner.

Preferably, said approaching movement (Mac) and/or said receiving tract (TR) comprise/comprises a tract with a purely vertical displacement component.

In this way, during the approach and/or release step there is no horizontal inertial component that intervenes on the sheet of foil and therefore it is possible to achieve the desired release in a simple and very precise manner.

Preferably, said method comprises releasing a first and a second plurality of said first and second sheets of foil respectively by interposing between each of them a folded tract of separator strip of said stacked structure.

In this way, it is possible to optimize the creation of the stacked structure with the sheets of foil of electrodes interposed between the layers of separator strip by controlling the alignment of the sheets of foil during the release step in order to be able to obtain the desired electrochemical cell in a precise and efficient manner.

Preferably, said method comprises releasing said first and/or second sheet of foil upon said approaching movement when said deviation angle is comprised between + 81° and +100° or - 81° and -100°.

In this way, the release takes place in a condition of substantial orthogonality between the outgoing reference direction and the stacking surface, which corresponds to the configuration in which the end tract of the separator strip practically abuts on the stacking surface and therefore presents the ideal condition of planarity for receiving the sheets of foil of the electrode.

In this way, the operation of releasing and transferring the sheets of foil on the separator strip in order to create the desired stacked structure is further optimized.

Preferably, said method comprises relatively moving said first handling device and said second handling device to produce a relative displacement between said stacking surface and said outgoing orientation control device so as to maintain substantially constant, for one for a variation of extension of said end tract preferably comprised between 10 and 100%, more preferably between 20% and 90%, even more preferably between 40 and 60% of a maximum length comprised between a first constraint position and a second constraint position of said separator strip with respect to said stacking surface, a same deviation angle with respect to said outgoing reference direction.

The Applicant has found that thanks to these characteristics it is possible to maintain a constant angular orientation between the outgoing orientation control device and the stacking surface during the unwinding and/or stacking steps so that the sail effect is not produced on the separator strip since the condition of angular variation prodromal to the creation of the asymmetric conditions of lateral fluid-dynamic pressures on the separator strip disappears.

Preferably, said method comprises performing said relative displacement when said deviation angle is comprised between + 81° and +100° or - 81° and -100°.

In this case, the variation of the extension of the end tract of the separator strip occurs in a condition of substantial perpendicularity with respect to the outgoing reference direction of the separator strip from the outgoing orientation control device, thus allowing to obtain a variation of a desired amount of separator strip that is usable, for example, to more effectively avoid dimensional encumbrance problems of other nearby kinematic mechanisms.

Preferably, said method comprises performing said relative displacement when said deviation angle is substantially equal to 0°.

Thanks to this technical solution, it is possible to perform the unwinding of the separator strip while maintaining the same angular orientation given by the outgoing orientation control device, thus further reducing the damages and the deformations that the separator strip could undergo.

Preferably, said method comprises configuring said second handling device of said stacking surface so as to move with a continuous movement said stacking surface along said second path defining a closed curve.

Thanks to this technical solution, it is possible to perform a process that never provides for stops, thus optimizing the completion timings of the stacked structure for the electrochemical cell, always maintaining an ideal constant tension of the separator strip, also avoiding any abrupt brakings and accelerations of the various working units concerned, which would thus suffer a significant reduction in the average life of use.

Preferably, said method comprises configuring said first handling device while following according to at least one component said second handling device when it displaces with continuous movement said stacking surface.

Thanks to this technical solution, it is possible to predict that the accumulation tract is modified according to the movements of the stacking surface by providing a desired additional quantity of separator strip to be used for the displacements in which the solutions according to the state of the art necessarily provide for stops.

Preferably, the sheet of foil is an electrode, more preferably a cathode or an anode.

Preferably, the anodes and cathodes inserted in said stacked structure of said separator strip are positioned one per layer and alternated with each other in sequence.

Preferably, the separator strip is an electrically insulating polymeric strip.

In this way, it is possible to create a stacked structure that houses in its inside sheets of foil suitable for use for electrochemical cells.

The characteristics and advantages of the invention will become clearer from the detailed description of a preferred embodiment thereof, illustrated by way of non-limiting example, with reference to the appended drawings wherein:
- Figure 1 is a schematic, front view of the apparatus according to the present invention;
- Figures 2 to 5 are schematic front views illustrating the apparatus according to the present invention during different operative steps;
- Figure 6 is a perspective view of an apparatus realized in accordance with the present invention;
- Figures 7 to 12 are schematic front views illustrating the apparatus according to the present invention during further operative steps,
- Figure 13 is a schematic, front view of the detail of a stacked structure that can be created by means of the apparatus according to the present invention,
- Figures 14 to 18 each represent a schematic view of a detail of operative steps of the apparatus according to the present invention;

Figures 19a, 19b, 19c each represent a schematic front view not to scale of details of operative steps of the apparatus according to the present invention. With reference initially to Figures 1 and 2, 100 indicates as a whole a stacking apparatus 100 for stacking a separator strip NS and sheets of foil,
realized in accordance with the present invention.

In preferred embodiments, the apparatus 100 is intended to carry out the stacking of the separator strip NS intended for producing electrochemical cells.

However, it is understood that this represents a possible embodiment example and that the apparatus 100 according to the present invention may be intended for stacking separator strips also intended for different uses, even in areas other than those related to the production of electrochemical cells.

For example, again in the field of energy storage, the present invention may find application in the creation of other stacked components intended for batteries or supercapacitors.

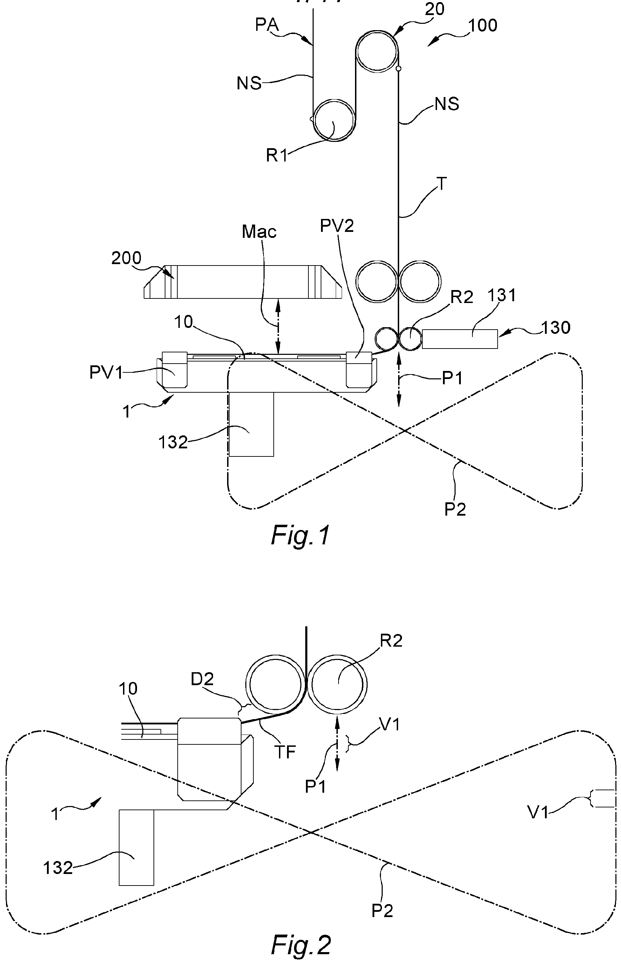

In some embodiments, such as for example the one illustrated in Figure 1, the apparatus 100 can be used in the context of a production line of stacked structures S for electrochemical cells, wherein the separator strip NS is stacked upon the folding on itself thus performing an overlap of layers and interposing between the layers the sheets of foil of electrodes.

The separator strip NS is a polymeric strip having, for example, the function of electrically insulating the sheets of foil of electrodes interposed between the different layers.

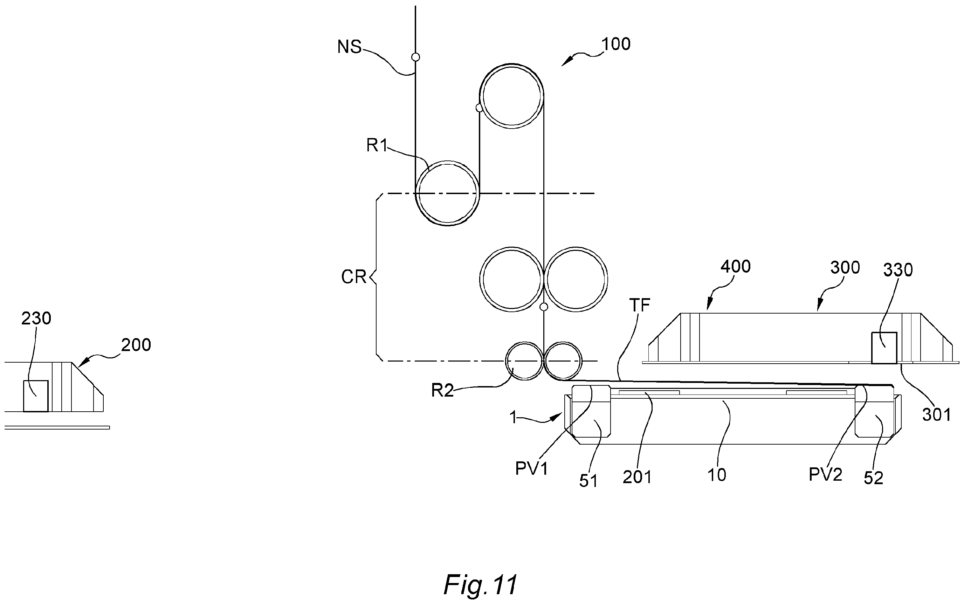

According to embodiments, the separator strip NS may be both a mono-material and a multilayer comprising a plurality of overlapped layers. An example of such materials used as a separator strip is polyethylene. With reference to Figure 11, with 201 and 301 two sheets of foil of electrodes, or more simply electrodes, are identified which are positioned on the separator strip NS during the stacking steps to create the stacked structure S and thus be able to proceed with the completion of the electrochemical cell.

In particular, a cathode sheet of foil is identified with 201, while an anode sheet of foil is identified with 301. An example of materials adoptable as a cathode in the form of sheet of foil is aluminium, while an example of materials adoptable as an anode in the form of sheet of foil is copper. In a general configuration thereof, the apparatus 100, realized according to embodiments depicted in the accompanying drawings, comprises a feeding unit 20, a stacking unit 1, a handling unit 130 and a first and/or a second release assembly of a sheet of foil 200, 300.

In preferred embodiments, the separator strip NS is supplied by a special dispensing device not shown in the figures. By way of example, this dispensing device of the separator strip NS can be formed by large-sized reels in which the separator strip NS is collected so as to be unwound and therefore supplied during the operation of the apparatus in a continuous manner.

The separator strip NS supplied by the dispensing devices is then dispensed to the feeding unit 20 which, in preferred embodiments, deals with optimizing the transfer and the management of the separator strip NS before it is stacked by the relative stacking unit 1, the characteristics of which will be described in detail below.

According to preferred embodiments the feeding unit 20 comprises an inlet section, not shown in the figures, preferably adapted to receive the separator strip NS from the dispensing device and an outlet section through which the separator strip NS transits out of the feeding unit 20 and is fed to the stacking unit 1. The stacking unit 1 comprises a stacking surface 10 adapted to receive the separator strip NS so as to allow the stacking thereof.

A feed path PA of the separator strip NS is thus defined between the inlet section and the outlet section.

It will be appreciated that the separator strip NS, before being supplied to the feeding unit 20 can transit through further units for example intended to carry out preliminary processings on the strip. For example, the separator strip may be subjected to preliminary cleaning, laser ablation or surface activation operations in order to uniform its surface characteristics.

In preferred embodiments the separator strip NS is continuously fed into the feeding unit 20.

In other words, the separator strip NS is introduced into the feeding unit 20 without ever stopping, proceeding with a speed greater than zero and preferably substantially constant.

In some specific cases, however, there may be a need to provide for interruptions of said continuous supply or to slow down the advancement of the separator strip NS for other operating needs linked to the specific processing being carried out.

According to some embodiments, it is provided that it is possible to continue unwinding the separator strip NS at constant speed without ever interrupting its feeding and unwinding, always keeping the relative kinematic mechanisms moving in order to reduce or avoid abrupt accelerations and decelerations of the handling devices, always guaranteeing a constant tension condition.

For this and other purposes, it can be provided for the presence of an accumulation device configured so as to accumulate a quantity of said separator strip NS.

As illustrated in the embodiment examples of Figure 1, 6, 11 and 12, the accumulation device included in the feeding unit 20 may comprise a first orientation control device R1 comprised in the feed path PA, and positioned upstream, with respect to an unwinding direction of the separator strip NS, of the outgoing orientation control device R2 so as to identify at least one accumulation tract T of the separator strip NS between the first orientation control device R1 and the outgoing orientation control device R2.

According to preferred embodiments, the apparatus 100 comprises the handling unit 130 which in turn comprises a first handling device 131.

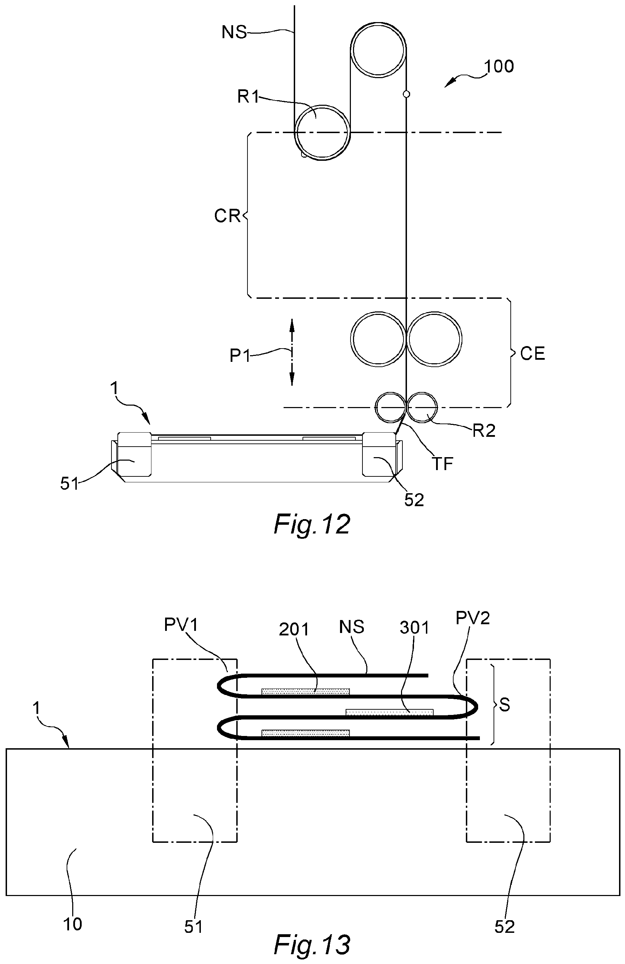

According to embodiment examples shown in Figures 11 and 12, the first handling device 131 is configured to displace said outgoing orientation control device R2 between
- an approached configuration CR, wherein the outgoing orientation control device R2 is at a minimum distance from said first orientation control device R1, the minimum distance being measured according to the length of said separator strip NS comprised between the first orientation control device R1 and the outgoing orientation control device R2, and
- an extended configuration CE, wherein said outgoing orientation control device R2 is at a maximum distance from said first orientation control device R1, said maximum distance being measured according to said length of said separator strip NS comprised between said first orientation control device R1 and said outgoing orientation control device R2.

The amount of accumulated strip can be variable, in that it can be envisaged that the amount of separator strip NS, in terms of length, that is accumulated is variable during the different steps of the process, in order to meet specific needs as anticipated above.

According to preferred embodiments, the handling unit 130 comprises an additional handling device (not shown in the figures) configured to move said first orientation control device R1 in order to further determine the desired amount of separator strip NS comprised in the accumulation tract T.

Still with reference to Figures 1, 6, 11 and 12 it can be noted that the first orientation control device R1 is a preferably idle roller and that the outgoing orientation control device R2 comprises two facing rollers R2a, R2b between which the separator strip NS is passed.

According to preferred embodiments, the two facing rollers R2a, R2b comprised in the outgoing orientation control device R2 have equal diameters and are idle or placed in controlled rotation around their central axis of rotation by movement via direct or transferred motorization via strips, chains or similar technical solutions.

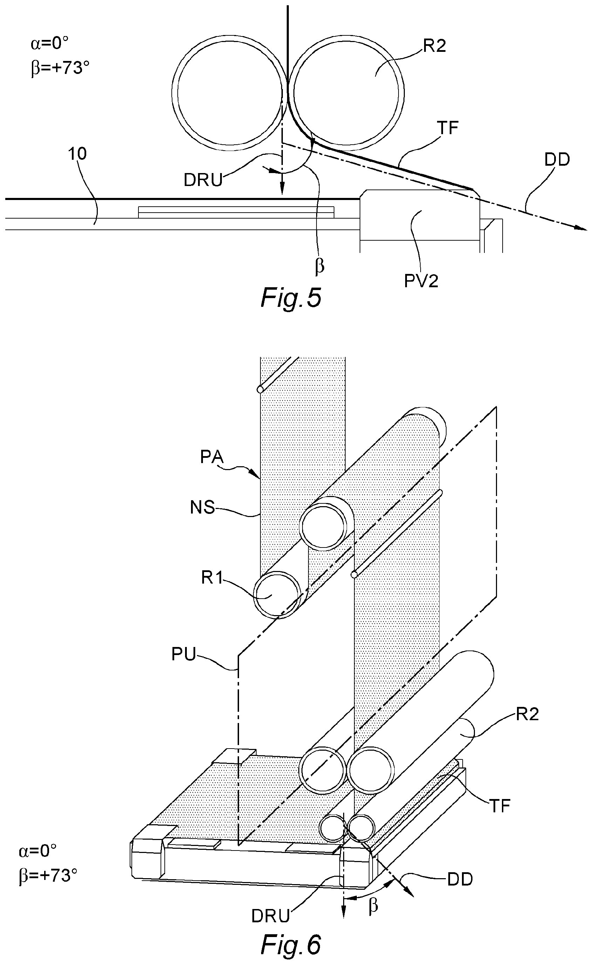

As illustrated in the example of Figure 6, in the accumulation tract T comprised between the first orientation control device R1 and the outgoing orientation control device R2 there are further idle rollers constrained to fixed positions that allow the separator strip NS to be wound and guided in a controlled manner.

More preferably, the feeding unit 20 comprises at least one tension control device, preferably a buffering element positioned at the accumulation tract T.

Still with reference to Figure 1, a schematic representation of the first handling device 131 can be noted, which may comprise, for example, horizontal, vertical guides or combinations thereof.

Still with reference to Figure 1, it can be noted that the first handling device 131 of said outgoing orientation control device R2 is configured to displace said outgoing orientation control device R2 along a first working path P1.

As shown in the examples depicted in Figures 1, 11 and 12, the first working path P1 is preferably a straight tract, more preferably perpendicular to the stacking surface 10 and even more preferably having a vertical orientation.

In fact, as shown in Figures 11 and 12, it can be noted that the two rollers R2a, R2b preferably move in pure vertical translation according to said first working path P1 displacing reversibly between the approached configuration CR and the extended configuration CE. It is important to note that during these displacements the separator strip NS always maintains a same angular orientation in the accumulation tract T. In other words, although the two rollers R2a and R2b are displaced integrally along said accumulation tract T according to a pure vertical translation, the orientation they impose on the separator strip NS remains unchanged, that is, they do not produce variations in inclinations of the strips during such movements. This means that the separator strip NS in the accumulation tract does not undergo asymmetrical conditions of lateral fluid-dynamic pressures and therefore does not suffer the sail effect and the related potential damage.

In this way, by varying the distance between the roller comprised in the first orientation control device R1 and the two rollers R2a, R2b comprised in the outgoing orientation control device R2, it will be possible to vary the length of the path that the separator strip must actually travel, allowing the desired amount to be accumulated.

In this way, considering for example the embodiment explained in Figure 12, by lowering the two rollers R2a, R2b the length of the separator strip NS comprised in the accumulation tract T can be increased and, considering a constant or substantially constant feed rate in input to the feeding unit 20, the strip part downstream of the two rollers R2a, R2b can be slowed down or stopped without producing a necessary stop of the supply of the separator strip NS.

Such a solution will be further discussed in embodiments described in detail below.

It should also be noted that in preferred embodiments, the action of the two rollers R2a, R2b, or more generally of the outgoing orientation control device R2, can be associated with a retaining device (not shown in the figure) of the separator strip NS configured so as to selectively control the advancement of the separator strip NS.

For example, in some embodiments in order to control the movement of said separator strip portion NS it can be provided for the presence of a gripper (not shown in the figure) or other similar retaining element, which acts on the separator strip when it is required that this is controlled, retained or stopped.

The gripper can advantageously be movable, so as to further regulate the feed rate of the relative strip by controlling its movement.

The gripper can also be associated with a relative knife which, if necessary, carries out the cutting of the separator strip NS to be stacked, to create an interruption in the continuity of said strip within the stacked structure S. This can take place for example upon completion of the stacking step of the separator strip NS on the stacking surface 10.

It is also significant to note that the aforementioned rollers comprised in the first orientation control device R1 and in the outgoing orientation control device R2 allow the passing separator strip NS to be managed by giving it specific directions (depending on the mutual position of the rollers, their diameters, etc.) and therefore effectively carrying out a control of the orientation that this separator strip NS takes on in space.

In preferred embodiments, the roller comprised in the first orientation control device R1 is preferably mounted on a buffering element, or similar technical solution, which allows to change the orientation of the separator strip NS by tilting or moving the axis of rotation of the roller itself. With reference now to Figures 1 to 12, the stacking unit 1 is arranged immediately downstream of the feeding unit 20 so as to receive the separator strip NS moved by it.

Preferably, the separator strip NS is fed by being displaced along a feeding direction while the outgoing orientation control device R2 is designed to give an outgoing reference direction DRU (i.e. a final angular orientation) that the separator strip NS would take on if it could freely continue its imposed motion and the constraints and the kinematic mechanisms placed downstream of said outgoing orientation control device R2 did not intervene.

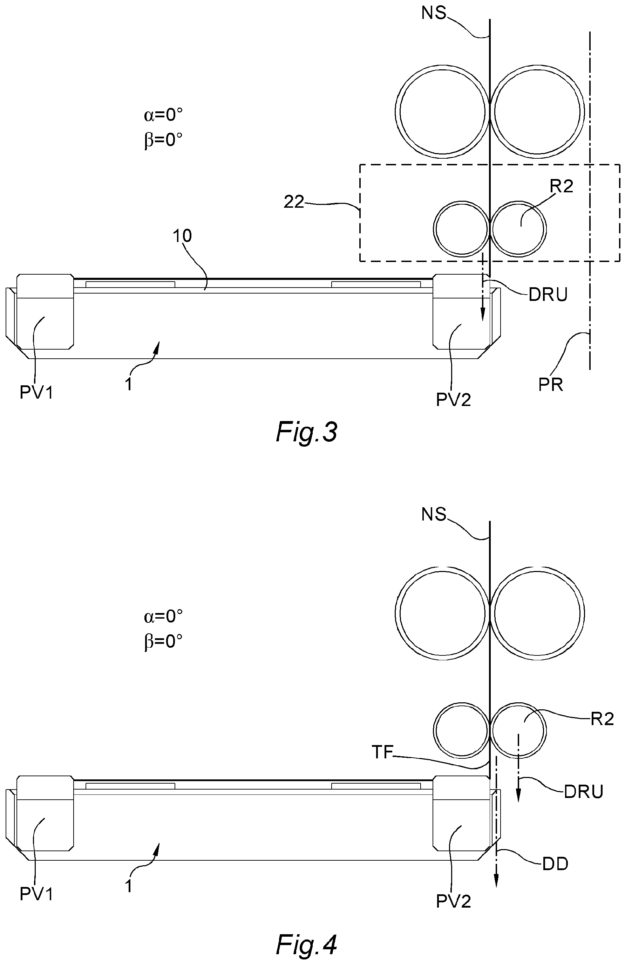

As can be noted for example from Figures 3, 6 and 8, the outgoing reference direction DRU is preferably vertical.

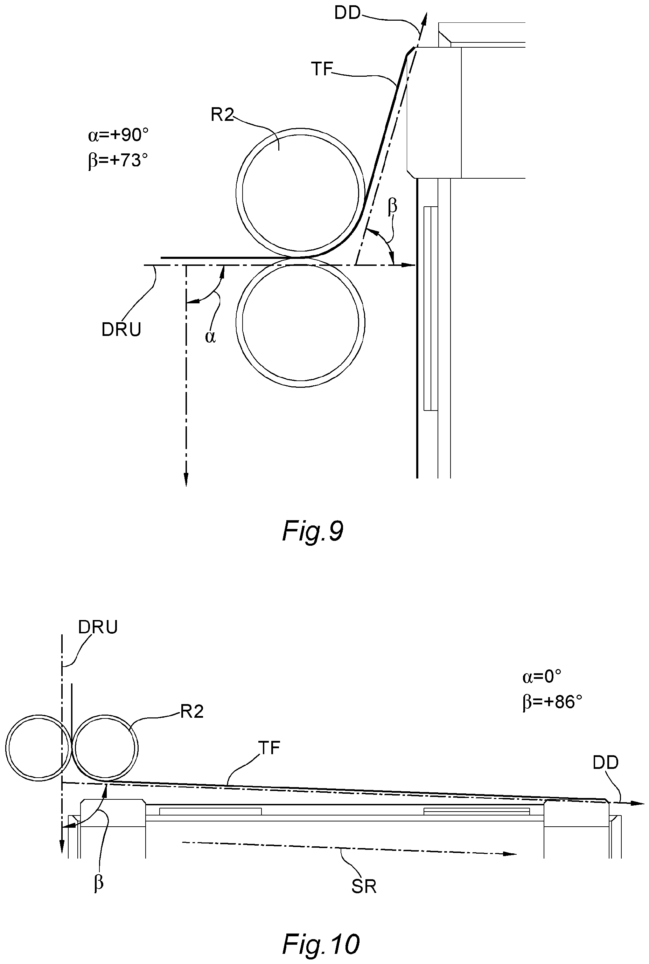

In the example reported in Figure 9, the outgoing reference direction DRU imposed on the separator strip NS by the two rollers R2a, R2b is horizontal. For greater practicality and clarity, an orientation angle α is defined which defines the angle that the outgoing reference direction DRU determines with respect to the vertical of the environment in which the apparatus 100 is installed. In this sense, it can be clearly understood how the configuration of the separator strip NS with respect to the outgoing orientation control device R2 determines an outgoing vertical reference direction DRU and a consequent value of the orientation angle α equal to 0° for example in the embodiment shown in Figure 5, while in Figure 9 an embodiment is shown relating to an outgoing horizontal reference direction DRU and a relative value of the orientation angle α equal to 90°.

With reference, for example, to Figure 1 or 2, an end tract of said separator strip NS defined downstream of said outgoing orientation control device R2 and upstream of a first constraint position PV1 or a second constraint position PV2 of said separator strip NS with respect to said stacking surface 10 is identified with TF.

It can be noted that, according to preferred embodiments shown in Figures 11 and 12, the first constraint position PV1 corresponds to a point of intervention of a first blocking device 51, while the second constraint position PV2 corresponds to a point of intervention of a second blocking device 52 which are comprised in the stacking unit 1 and acting at the stacking surface 10. More precisely and now with reference to Figure 12 only, the first blocking device 51 is the device placed in a distal position with respect to said outgoing orientation control device R2, while the second blocking device 52 is placed in a proximal position with respect to said outgoing orientation control device R2.

According to preferred embodiments, the first and/or second blocking device 51, 52 are grippers or suction cups or electromagnetic systems adapted to selectively retain a portion of the separator strip NS integrally with the stacking surface 10.

According to embodiments, the stacking surface 10 has a substantially planar development with a substantially rectangular base. It can be sized according to the desired formats of stacked structure S to be created.

Still, also the relative positions of the first and/or the second blocking device 51, 52 can be defined or modified depending on the stacked structure format S that one wishes to create. In other words, the first and/or the second blocking device 51, 52 are constrained with permitted coplanar and/or perpendicular translation with respect to the stacking surface 10.

According to some embodiments, shown by way of example in Figure 11, the stacking unit 1 comprises a plurality of blocking devices 51, 52.

Still with reference to Figure 11, it can be noted that the separator strip NS is constrained by the second blocking device 52. In this condition, the end tract TF is defined downstream of the outgoing orientation control device R2 and the second blocking device 52.

It is clear that, when the first blocking device 51 is activated, the end tract TF changes its extension and the relative deviation angle β.

This happens since it is now the first blocking device 51 that defines the extension and angular orientation of the end tract TF.

In general, the activation of a blocking system, which produces the realization of a removable constraint of the separator strip NS at the stacking surface 10, interposed between the outgoing orientation control device R2, placed upstream, and a blocking device placed further downstream always entails a variation in the extension of the end tract and in some cases a variation in the relative deviation angle β.

According to what has been discussed above and as shown for example by Figures 11 and 12 it can be noted that the extension and the orientation of the end tract TF can vary significantly and rapidly depending on whether or not a blocking device is engaged on the separator strip NS. It is in fact evident that when a gripper acts on a tract of separator strip NS constraining it integrally to the stacking surface 10, this portion does not undergo further displacements relative to the stacking surface but moves rigidly therewith as if they defined a single body. In this sense, therefore, it seems appropriate to point out how the part of the separator strip NS not yet constrained to the stacking surface 10 and placed downstream of the outgoing orientation control device R2 is identified as the aforementioned end tract TF and characterized by the possibility of significantly varying in extension and spatial orientation before being further constrained and behaving integrally with said stacking surface 10.

Preferably and with reference, for example, to Figures 3, 5 and 8, embodiments are shown wherein said end tract TF is oriented according to a deviation direction DD, identifiable downstream of said outgoing orientation control device R2, and defining a deviation angle β with respect to said outgoing reference direction DRU.

Still, as can be further noted from Figures 3, 5 and 8 the deviation angle β may vary from about + 100° to -100° with respect to the outgoing reference direction DRU.

Thanks to this angular variation of the end tract TF, it is possible to stack it on the stacking surface 10 by having it fold first in one direction and then in the opposite direction, thus creating a sequence of continuous and overlapped layers as shown in Figure 13.

With reference to Figure 13, it can be noted that the two blocking devices 51, 52 acting respectively at the first and second constraint position PV1, PV2 can act on the portion of separator strip NS to be constrained simultaneously or at different times.

According to preferred embodiments, the blocking device concerned is operated by blocking the new separator strip layer NS as soon as it is led substantially to abut on the stacking surface 10 or on an underlying layer of the stacked structure S, when completion is ongoing.

With reference to Figure 6 it is interesting to note how said outgoing reference direction DRU corresponds to the longitudinal axis of an outlet plane PU coplanar to said separator strip NS at said outgoing orientation control device R2.

According to one embodiment, said apparatus 100 comprises the handling unit 130 comprising the first and/or the second handling device 131, 132 which are/is configured to respectively move said outgoing orientation control device R2 and/or said stacking surface 10 so as to mutually displace them while following according to said outgoing reference direction DRU, so as to maintain said deviation angle β greater in an absolute value than 60°, more preferably than 70°, even more preferably than 80° when said end tract TF has an extension greater than 1/3 of a maximum length comprised between said first constraint position PV1 and said second constraint position PV2 of said separator strip NS with respect to said stacking surface 10. Preferably, said maximum length is measured according to a direction perpendicular to said outlet plane PU.

It can in fact be noted that, considering what is shown in Figures 1, 2, 6, 11 and 12, the first handling device 131 displaces said outgoing orientation control device R2 while following with respect to the movements produced by the stacking surface 10 by means of the second handling device 132. Preferably, the second handling device 132 may comprise, for example, horizontal, vertical guides or combinations thereof.

According to preferred embodiments, said displacement produced by the handling device 131 is configured to be a pure vertical translation. Since the first and second handling device 131, 132 are configured to be mutually as following this implies that also the second handling device 132 will displace the stacking surface 10 by the same amount of vertical translation performed by the outgoing orientation control device R2.

With reference for example to Figures 1 and 2, it can be noted that the displacement of the stacking surface 10 produced by the second handling device 132 defines the second working path P2, which corresponds to a closed path of complex shape, for example bilobed or elongated bow-shaped, comprising both horizontal and vertical displacement components, said second working path P2 being, however, configured to displace itself in a manner consistent with the first working path P1 of the outgoing orientation control device R2.

In other words, the second working path P2 is configured to comprise a vertical translation component substantially equal in extension and simultaneous with the pure vertical translation performed by the outgoing orientation control device R2 according to the first working path P1. This pure vertical translation component comprised in the first and second working path P1, P2 is identified in Figure 2 as V1.

This implies that while the stacking surface 10 displaces itself vertically consistently with the outgoing orientation control device R2, a further displacement thereof according to a horizontal component is performed.

In this way it is possible to produce a rapid horizontal displacement of the stacking surface 10 by varying the deviation angle β at high speed, thus leading an extended amount of the end tract TF of the separator strip NS to approach the stacking surface 10 in a short displacement along said second working path P2, in order to reach the abutment condition between the end tract TF and the stacking surface 10 around a value of the deviation angle β equal to about +90° or -90°.

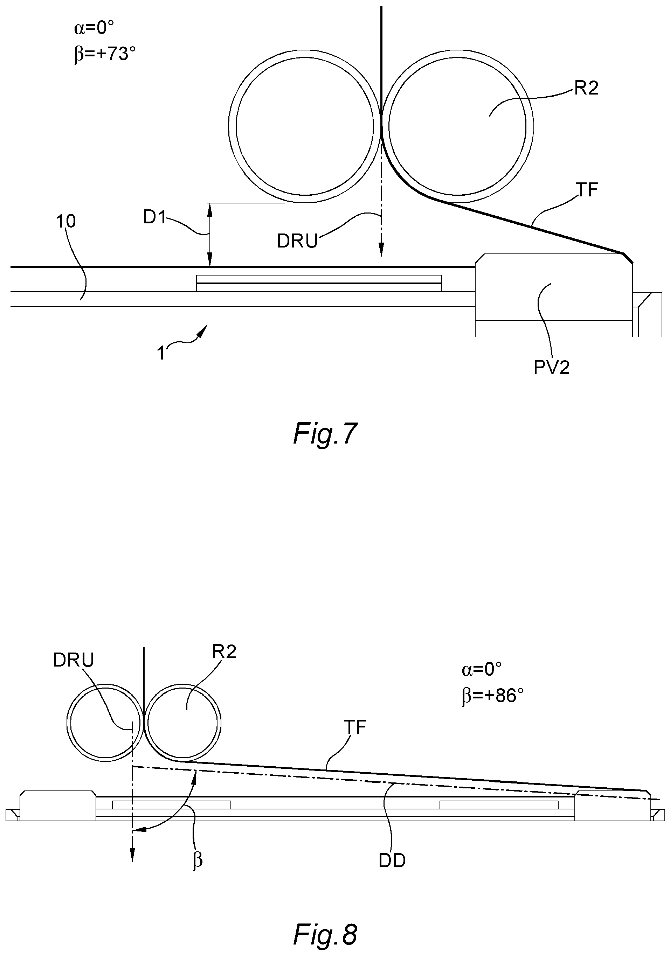

In other words and with reference now to Figure 7, said handling unit 130 is configured to relatively displace said outgoing orientation control device R2 with respect to said stacking surface 10 so as to maintain a first distance D1 therebetween, measured according to said outgoing reference direction DRU, substantially constant while said stacked structure of said separator strip NS is being created and comprised between 0 and 30 mm, more preferably between 0 and 15 mm, even more preferably substantially equal to 0 mm.

As can be noted, for example, from Figures 1 and 6 and as described above, the first distance D1, preferably measured according to the vertical direction, is always maintained lower than a limit value comprised between 0 and 30mm and as constant as possible, except for the overall encumbrances of the kinematic mechanisms involved.

It can be seen that this value can be maintained even when the stacking surface 10 is displaced horizontally by amounts greater than 30 mm since what is constraining is the distance according to the vertical component only.

According to preferred embodiments and with reference to Figure 8 and even more to Figure 10, it can be noted that, for values of the deviation angle β that are close, for example, to +90° or -90°, the first handling device 131 and said second handling device 132 are configured to produce a relative displacement SR between said stacking surface 10 and said outgoing orientation control device R2 so as to maintain substantially constant a same deviation angle β with respect to said outgoing reference direction DRU for a variation of extension of said end tract TF comprised between 20% and 90% of a maximum length comprised between a first constraint position PV1 and a second constraint position PV2 of said separator strip NS with respect to said stacking surface 10, so as to minimize the amount of surface of said separator strip NS exposed to variations of lateral fluid-dynamic pressures depending on unwinding angular variations of said separator strip NS while a stacked structure of said separator strip NS is being created.

It is in fact clear that when the stacking surface 10 is displaced according to the second working path P2 at a deviation angle β equal to 85° ± 10%, for example away from the outgoing orientation control device R2, the configuration imposes that the outgoing orientation control device R2 be kept while following according to at least one component the stacking surface 10, that is, to keep the first distance D1 substantially constant, causing the relative displacement of the stacking surface 10 with respect to the outgoing orientation control device R2 to be substantially horizontal according to a deviation angle β substantially equal to +90° or -90°, thus avoiding, in this case, the formation of the sail effect on the end tract TF of the separator strip NS.

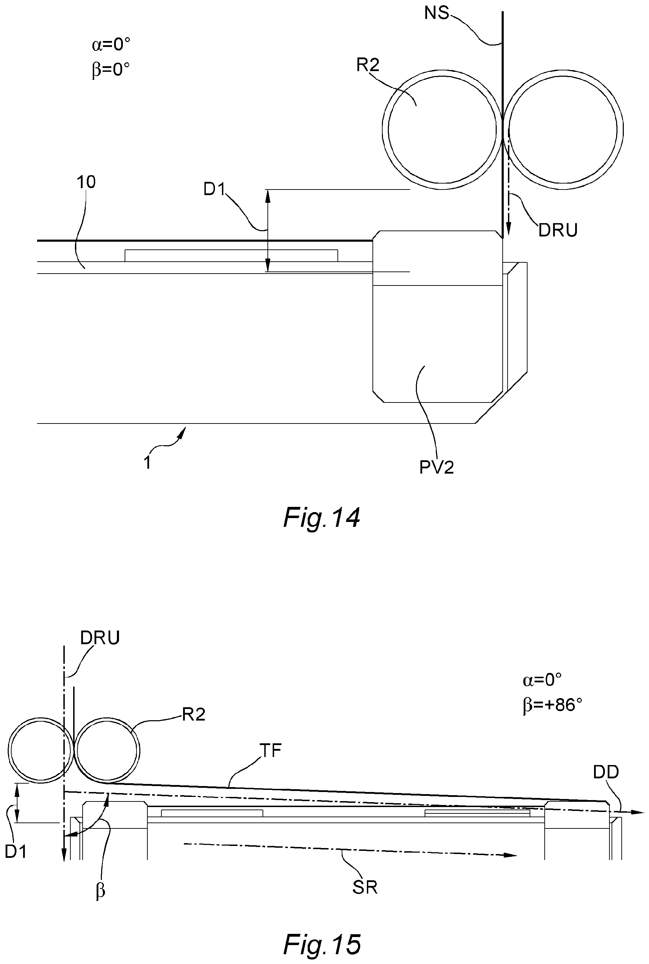

According to embodiments shown, for example, in Figure 15, when said deviation angle β is substantially equal to +90° or -90°, said first distance D1 varies
- when approaching said stacking surface, from said constant value of a value comprised between said first distance and 200% of said first distance, or
when moving away from said stacking surface, from said constant value to a value comprised between said first distance and 200% of said first distance. In this way it is, for example, possible to further increase the value of the deviation angle β by causing the separator strip NS to be led to abut at said stacking surface 10 more effectively and by reducing the possibility of forming folds on the surface of the separator strip NS while it is constrained by the first and/or second blocking device 51, 52.

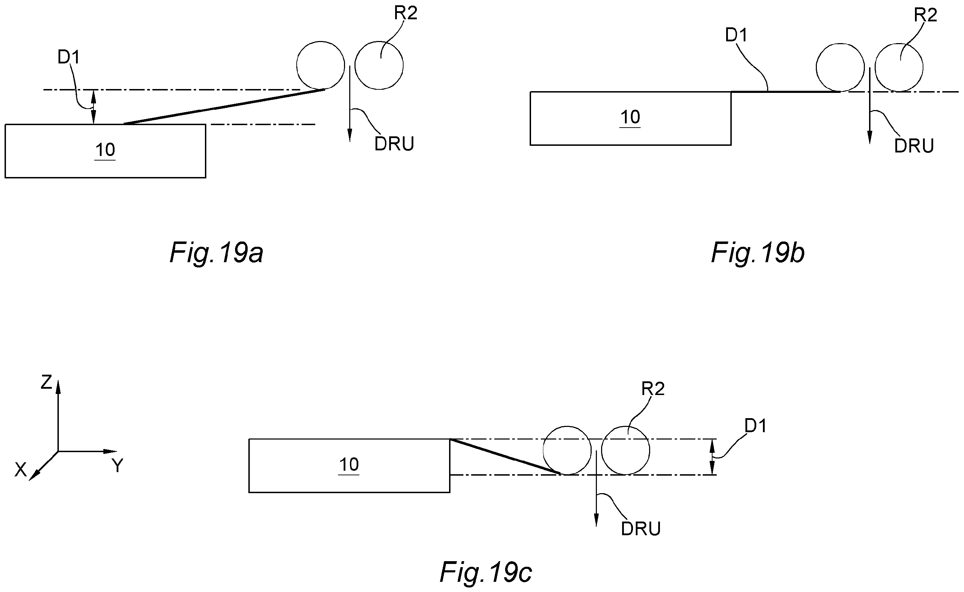

With reference to Figures 19a, 19b, 19c, some moments relating to the variations of the first distance D1 while the outgoing orientation control device R2 and the stacking surface 10 move towards each other are shown in detail. In the example thus depicted, the first direction D1 is measured according to the vertical axis Z. In more detail, a condition in which the first distance D1 is equal to 10mm and the approaching displacement begins is schematically shown in Figure 19a. For simplicity of exposition and with a mere exemplary function, a case is considered in which the outgoing orientation control device R2 is substantially stationary while the stacking surface 10 displaces approaching along the outgoing reference direction DRU, i.e. upwards. In Figure 19b it can be noted that the stacking surface 10 has reached the height of the outgoing orientation control device R2 and the first distance D1 has become substantially zero. Figure 19c shows the moment when the stacking surface 10 continues the ongoing movement in Figure 19b while maintaining the same direction and sense adding a further vertical upward displacement value equal in modulus to the initial value of the first distance D1. In this configuration, the deviation angle β is substantially equal to 110°. With reference to Figure 2, said handling unit 130 is configured to displace said outgoing orientation control device R2 with respect to said stacking surface 10 by defining a second distance D2 between said outgoing orientation control device R2 and said stacking surface 10 so as to:
- Reduce said second distance D2 to the minimum when said deviation angle β is comprised between + 80° and -80°, and/or
- Selectively extend said second distance D2 when said deviation angle β is comprised between + 81° and +100° or - 81° and -100°.

Still with reference to Figure 2 it can be noted that the second distance D2 is identified as the minimum distance existing between any portion of said outgoing orientation control device R2 and any portion of the stacking surface 10.

It can therefore be clearly understood that the second distance D2 can preferably be substantially equal to said first distance D1 when said deviation angle β is comprised between + 80° and -80°, thus satisfying the condition provided for the first distance D1 comprised between 0 mm and 30 mm.

Furthermore, according to preferred embodiments, when said deviation angle β is comprised between + 81° and +100° or - 81° and -100° said second distance D2 is comprised between 0% and 70% of the maximum length comprised between said first constraint position PV1 and said second constraint position PV2.

Alternatively, according to other preferred embodiments, when said deviation angle β is comprised between + 81° and +100° or - 81° and -100° said second distance D2 is comprised between 0% and 10% of a maximum length comprised between said first constraint position PV1 and said second constraint position PV2.

According to embodiments shown for example in Figures 11, 16 and 17, the apparatus preferably comprises a first and a second release assembly of a sheet of foil 200, 300, configured with respect to said second handling device 132 to release, at a minimum release distance DmR from said stacking surface 10 on a portion of said separator strip NS at said stacking surface 10, a first or a second sheet of foil 201, 301 upon an approaching movement Mac of said first or second release assembly of a sheet of foil 200, 300 with respect to said stacking surface 10 during a receiving tract TR of said second working path P2, said approaching movement Mac being configured so as to produce a condition of substantially zero relative speed between said first and/or second release assembly of a sheet of foil 200, 300 and said stacking surface 10, and having at least one displacement component parallel to said outgoing reference direction DRU, preferably perpendicular to said stacking surface 10, more preferably vertical.

According to embodiments, said first and/or second release assembly of a sheet of foil 200, 300 comprise corresponding first and/or second displacement device 210, 310 configured to selectively displace said first and/or second release assembly of a sheet of foil 200, 300 according to said approaching movement Mac.

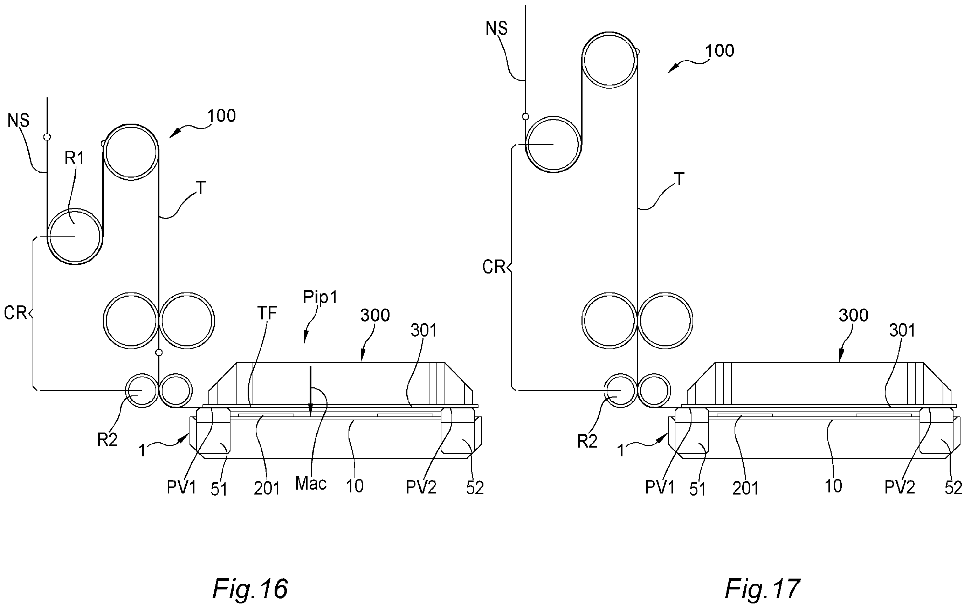

Preferably, said first and/or second displacement device 210, 310 are kinematic mechanisms with two degrees of freedom, more preferably a composition of a horizontal guide and a vertical guide. According to preferred embodiments shown in Figures 16 and 17, the approaching movement Mac substantially starts when the first orientation control device R1 and the outgoing orientation control device R2 are in the approached configuration CR, while the approaching movement Mac substantially ends when the first orientation control device R1 and the outgoing orientation control device R2 are in the extended configuration CE.

With specific reference now to Figures 2 and 17 and considering a preferred embodiment, it can be noted that this general configuration entails that while the outgoing orientation control device R2 translates vertically by displacing itself away from the first orientation control device R1 of purely vertical motion V1 passing from the approached configuration CR to the extended configuration CE, the stacking surface 10 and the second release assembly of a sheet of foil 300 perform a movement having the same vertical component V1 so as to achieve in this process step a condition of consistent or integral movement substantially identical as to the vertical component between the three different devices.

This fine concerted mechanism ensures that the release of the second sheet of foil 301 takes place with the minimum damage inducible on the stacked structure S being created, with a minimum sail effect given by the guaranteed condition of first distance D1 comprised between 0 mm and 30 mm, with a constant tension of the separator strip NS guaranteed by the possibility of selectively determining the accumulation tract T and performing a continuous movement of the stacking surface 10 permitted by the fact that while the release of the first and/or second sheet of foil 201, 301 takes place, the entire system translates vertically by displacing itself from the approached configuration to the extended one.

This concerted mechanism also occurs when the release of the first sheet of foil 201 by the release assembly of a sheet of foil 300 is carried out.

Preferably and with reference to Figure 11, said first and a second release assembly of a sheet of foil 200, 300 respectively comprise a first or second retaining device 230, 330 configured so as to allow to selectively retain the first and/or second sheet of foil 201, 301, for example before and during the approaching movement Mac, and to release the first and/or second sheet of foil 201, 301, by deactivating said first or second retaining device 230, 330 for example at the end of the approaching movement Mac.

These first and second retaining device 230, 330 are vacuum systems such as, for example, suction cups.

According to one embodiment, said second handling device 132 is configured to displace said stacking surface 10 along said receiving tract TR of said second working path P2 so as to approach it with respect to said first and/or second displacement device 210, 310 during said approaching movement Mac.

Thanks to this technical solution, it is possible to reduce the approaching timings and increase the relative speed in the approaching step between the stacking surface 10 and the first or second release assembly of a sheet of foil 200, 300.

According to a further embodiment, said second handling device 132 is configured to displace said stacking surface 10 along said receiving tract TR of said second working path P2 so as to displace it away from said first and/or second handling device 210, 310 during said approaching movement Mac, said approaching being performed by means of a difference in the displacement speed between said stacking surface 10 and said first or second release assembly of a sheet of foil 200, 300.

In this way, an approach between the stacking surface 10 and the first or second release assembly of a sheet of foil 200, 300 that allows a release to take place in a less abrupt or sudden manner can be performed.

The present invention also relates to the implementation of a method 500 for creating the stacked structure S of a separator strip NS, preferably for an electrochemical cell intended for producing batteries.

This method 500 provides for arranging an apparatus 100 comprising a fixed frame on which the feeding unit 20, the handling unit 130, the stacking unit 1 and the first and second release assembly of sheets of foil 200, 300 are constrained.

The handling unit 130 comprises a vertical guide 131 that allows a pure vertical translation of the two facing and counter-rotating rollers R2a, R2b and a combined horizontal and vertical guide 132 that allows a complex displacement in the space discussed in more detail below. According to alternative embodiment the outgoing orientation control device R2 comprises four rollers.

The stacking surface 10 is mounted on an equipment integrally constrained to the combined horizontal and vertical guide 132.

The vertical guide 131 and the horizontal and vertical combined guide 132 are mounted on the fixed frame of the apparatus 100 and guided by motorization.

Downstream of the dispensing zone (not shown in the figures) the passage of the separator strip NS passes through the feeding unit 20. More in detail and with reference to Figures 1, 16 and 17, the separator strip NS passes through the accumulation tract T, comprised in the feeding unit 20, defined between the accompanying roller R1 and the two rollers R2a, R2b placed at the outlet from the accumulation tract T itself.

Downstream of the two rollers R2a, R2b the conveyor belt is stably constrained to the stacking surface 10 by means of the gripper 52.

For further clarity and descriptive completeness, table 1 showing an example of a sequence of operations carried out by the apparatus 100 according to the method 500 in order to create the stacked structure S is reported.

**Table 1. Example of sequence of main operations for creating the stacked structure S.**

| **Sequenza operativa** | **Angolo di deviazione β (segno positive per rotazioni in senso antiorario nelle figure)** | **Configurazione** | **Movimento di Avvicinamento Coerente Mac** |
|---|---|---|---|
| 1 | 0° | CE | |
| 2 | da 0° a +90° | da CE a CR | |
| 3 | 90° | CR | |
| 4 | 90° | da CR a 6/7 di CE | 300 |
| 5 | da +90° a 0° | da 6/7 di CE a 7/7 di CE | |
| 6 | da 0° a -90° | da CE a CR | |
| 7 | -90° | CR | |
| 8 | -90° | da CR a 6/7 di CE | 200 |
| 9 | da -90° a 0° | da 6/7 di CE a 7/7 di CE | |
| 10 | 0° | CE | |

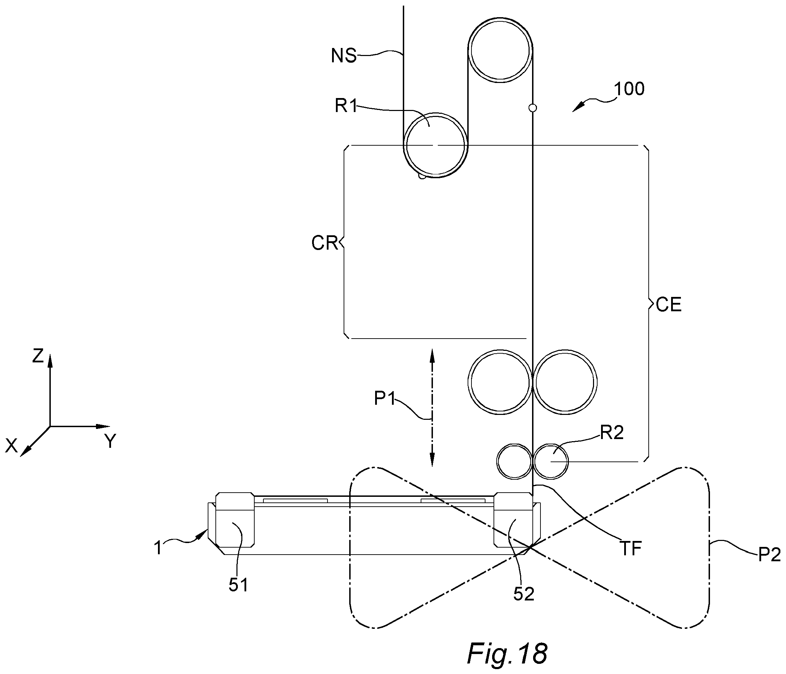

With reference to Table 1 and to Figure 18, it can be noted that in step 1 the end tract TF of the separator strip NS is oriented according to a deviation angle β equal to 0°.

The end tract TF is measured just downstream of the last point of contact between the roller R2b and the separator strip NS and just upstream of the point of contact between the first gripper 52 and the separator strip NS.

The end tract is about 12 mm long. The first distance D1 is equal to 7 mm and the second distance D2 is equal to the first distance D1.

Still in Figure 18, the second closed working path P2 made by the combined horizontal and vertical guide 132 is represented, showing its substantially bilobed shape (similar to the symbol of infinity placed horizontally) having the substantially straight and vertical lateral tracts (as can be noted from the parallelism between these portions of the second working path P2 and the vector triad shown in which Z represents the vertical axis).

Again, in step 1 the accompanying roller R1 and the two counter-rotating facing rollers R2a, R2b are in the extended configuration CE. The accumulation tract T is measured, according to the length of the separator strip NS, from the horizontal diameter of the accompanying roller R1 to the horizontal diameter of the two counter-rotating facing rollers R2a, R2b.

In step 2, with reference to Figure 18, the stacking surface 10 is moved simultaneously to the right (corresponding to an increase in the coordinate position Y) and upwards (corresponding to an increase in the coordinate position Z). The separator strip NS is still retained by the second gripper 52 (see for example Figure 5).

At the same time, the two counter-rotating facing rollers R2a, R2b rise vertically (corresponding to an increase in the coordinate position Z) being displaced by the vertical guide 131 from the extended configuration CE to the approached configuration CR.

As can be noted from Figure 18 and Table 1, the deviation angle β increases from 0° to 90°.

In the Figures 1-5 and 7-18 shown the representation is two-dimensional in the plane YZ.

In this discussion, therefore, no conditions will be explained in which the variation in position along X will be significant.

Still, with reference to Figure 6, it can be noted that displacements along the axis X of the separator strip NS and therefore of the outlet plane PU would risk entailing misalignments and/or torsional phenomena of the strip itself, risking complicating or compromising the effectiveness of the invention itself.

In step 3 and with reference to Figure 16, upon pure vertical translation, the two counter-rotating facing rollers R2a, R2b have reached the approached configuration CR, the deviation angle β is substantially equal to 90° and the stacking surface 10 is flanked on the right to the two rollers R2a, R2b.

The separator strip NS is substantially abutted on the surface 10 and is further blocked by the first gripper 51.

Still with reference to Figure 16, at the end of step 3 the second release assembly of the electrode 300 has reached a position in which above it is facing the stacking surface 10.

The first distance D1 is equal to about 3 mm while the second distance D2, measured as the minimum distance between any part of the two rollers R2a, R2b and any part of the stacking surface 10, is equal to about 7 mm.

In step 4, the "mobile stop" begins. As previously argued, one is in the following condition: the displacement vector of the first working path of the two rollers R2a, R2b coincides in the direction sense and modulus with the displacement vector of the second working path of the stacking surface 10.

This displacement vector is a pure vertical translation oriented downwards (corresponding to a displacement having a negative value in the component Z only) displacing the two rollers R2a, R2b and the stacking surface integrally from the approached configuration CR towards the extended configuration CE. During the entire "mobile stop" the deviation angle β is maintained substantially equal to +90°.

At the end of step 4, a configuration equal to about 6/7 of the extended configuration CE is reached and the "mobile stop" ends, concluding the step of following at minimum approached distance and the release of the second sheet of foil 301 on the first folded layer of separator strip NS of the stacked structure S.

During step 4 the two rollers R2a, R2b, the stacking surface 10 and the second release assembly of a sheet of foil 300 have moved by the same displacement according to an identical displacement vector.

The first distance D1 and the second distance D2 have the same values as in step 3.

In step 5 the stacking surface 10 is displaced downwards and to the left similarly to step 2 but with opposite displacement direction. Consistently, the two rollers R2a, R2b translate further downwards reaching the extended configuration CE.

In this step 5 the deviation angle β is reduced from +90° to 0° returning to a situation equivalent to step 1, with the differences that now the separator strip NS is retained by the first gripper 51 and the sheet 301 has been laid on the first folded layer of separator strip NS.

Steps from 6 to 10 represent the mirror image on the left of what happened during steps 2 to 5 on the right, providing for the intervention of the first release assembly of the sheet of foil 200.

Consistently, therefore, at the end of step 10 (equivalent as spatial configuration of the apparatus 100 to that of step 1) on the stacking surface 10, two layers of separator strip NS will have been folded and two sheets of foil 301, 201 (cathode and anode electrodes) positioned.

As is clearly evident, from step 10 the method 500 can continue with the new step 2 proceeding with the creation of the desired stacked structure S.

More generally, all the elements described so far in relation to the embodiment illustrated in Figure 1 may be combined with all the possible embodiments provided for by the present invention and described above.

It goes without saying that, in order to meet specific and contingent application needs, a person skilled in the art will be able to make further modifications and variants that are nevertheless within the scope of protection as defined by the following claims.

## Claims

1. Stacking apparatus (100) for stacking a separator strip (NS) and sheets of foil (201, 301), said apparatus (100) comprising:
- a feeding unit (20) configured to feed said separator strip (NS) along a feed path (PA), wherein
∘ said feeding unit (20) comprises an outgoing orientation control device (R2) of said separator strip (NS),
∘ said outgoing orientation control device (R2) is placed directly upstream of said stacking unit,
∘ said outgoing orientation control device (R2) is configured to define an outgoing reference direction (DRU) of said separator strip (NS),
- a stacking unit (1) comprising a stacking surface (10), configured to receive said separator strip (NS) and said sheets of foil,
- a handling unit (130) comprising a first and a second handling device (131, 132) configured to respectively move said outgoing orientation control device (R2) of said separator strip (NS) and said stacking surface (10), wherein said second handling device (132) of said stacking surface (10) is configured to displace said stacking surface (10) along a second working path (P2) so as to stack said separator strip (NS) at said stacking surface (10),
- a first and/or second release assembly of a sheet of foil (200, 300), configured to release, at a minimum release distance (DmR) from said stacking surface (10) on a portion of said separator strip (NS) at said stacking surface (10), a first or a second sheet of foil (201, 301) with a condition of substantially zero relative speed between said first and/or said second release assembly of a sheet of foil (200, 300) and said stacking surface (10) during a displacement along said second path (P2).

2. Apparatus (100) according to the preceding claim, wherein said first and/or second release assembly of a sheet of foil (200, 300) are/is configured to release, at said minimum release distance (DmR) from said stacking surface (10), said first and/or second sheet of foil (201, 301) upon an approaching movement (Mac) of said first or second release assembly of a sheet of foil (200, 300) with respect to said stacking surface (10) during a receiving tract (TR) of said second working path (P2), said approaching movement (Mac) being configured so as to produce said condition of substantially zero relative speed between said first and/or said second release assembly of a sheet of foil (200, 300) and said stacking surface (10) during said displacement along said second path (P2).

3. Apparatus (100) according to the preceding claim, wherein said receiving tract (TR) and/or said approaching movement (Mac) have/has at least one displacement component parallel to said outgoing reference direction (DRU), preferably perpendicular to said stacking surface (10), even more preferably vertical.

4. Apparatus (100) according to claim 2 or 3, wherein said receiving tract (TR) and/or said approaching movement (Mac) comprise/comprises a purely vertical displacement tract.

5. Apparatus (100) according to any one of the preceding claims, wherein said first and/or said second release assembly (200, 300) of a sheet of foil comprise/comprises a corresponding first and/or second displacement device (210, 310) configured to selectively displace said first and/or second release assembly (200, 300) of a sheet of foil according to said approaching movement (Mac).

6. Apparatus (100) according to the preceding claim, wherein said first and/or second displacement device (210, 310) is/are a kinematic mechanism(s) with two degrees of freedom, more preferably a composition of a horizontal guide and a vertical guide.

7. Apparatus (100) according to any one of the preceding claims, wherein:
• said feeding unit (20) comprises a first orientation control device (R1) and said outgoing orientation control device (R2) of said separator strip (NS), comprised in said feed path (PA) and positioned with respect to each other respectively upstream and downstream in an unwinding sequence of said separator strip (NS) so as to identify at least one accumulation tract (T) of said separator strip (NS) between said first orientation control device (R1) and said outgoing orientation control device (R2), said outgoing orientation control device (R2) being placed directly upstream of said stacking unit (1),
• said second handling device (132) is configured to displace said stacking surface (10) along said receiving tract (TR) of said second working path (P2) so as to approach it with respect to said first and/or second handling device (210, 310) during said approaching movement (Mac).

8. Apparatus (100) according to any one of claims 1 to 7, wherein
• said feeding unit (20) comprises a first orientation control device (R1) and said outgoing orientation control device (R2) of said separator strip (NS), comprised in said feed path (PA) and positioned with respect to each other respectively upstream and downstream in an unwinding sequence of said separator strip (NS) so as to identify at least one accumulation tract (T) of said separator strip (NS) between said first orientation control device (R1) and said outgoing orientation control device (R2), said outgoing orientation control device (R2) being placed directly upstream of said stacking unit (1),
• said second handling device (132) is configured to displace said stacking surface (10) along said receiving tract (TR) of said second working path (P2) so as to displace it away from said first and/or second handling device (210, 310) during said approaching movement (Mac), said approaching being performed by means of a difference in the displacement speed between said stacking surface (10) and said first or second release assembly of a sheet of foil (200, 300).

9. Apparatus (100) according to any one of the preceding claims, wherein said handling unit (130) is configured to displace said outgoing orientation control device (R2) with respect to said stacking surface (10) so as to maintain a first distance (D1) between said outgoing orientation control device (R2) and said stacking surface (10), measured according to said outgoing reference direction (DRU), substantially constant while said stacked structure (S) of said separator strip (NS) is being created and comprised between 0 and 30 mm, more preferably between 0 and 15 mm, even more preferably substantially equal to 0 mm.

10. Apparatus (100) according to any one of the preceding claims, wherein
• said feeding unit (20) comprises a first orientation control device (R1) comprised in said feed path (PA), and positioned upstream, with respect to an unwinding direction of said separator strip (NS), of said outgoing orientation control device (R2) so as to identify at least one accumulation tract (T) of said separator strip (NS) between said first orientation control device (R1) and said outgoing orientation control device (R2),
• said first handling device (131) is configured to displace said outgoing orientation control device (R2) between
- an approached configuration (CR), wherein said outgoing orientation control device (R2) is at a minimum distance from said first orientation control device (R1), said minimum distance being measured according to the length of said separator strip (NS) when it is comprised between said first orientation control device (R1) and said outgoing orientation control device (R2), and
- an extended configuration (CE), wherein said outgoing orientation control device (R2) is at a maximum distance from said first orientation control device (R1), said maximum distance being measured according to said length of said separator strip (NS) when it is comprised between said first orientation control device (R1) and said outgoing orientation control device (R2),
so as to maintain a same angular orientation in all the spatial configurations that said separator strip (NS) may take on comprised between said approached configuration (CR) and extended configuration (CE) at said accumulation tract (T), and that the only part of said separator strip (NS) downstream of said outgoing orientation control device (R2) which varies the angular orientation while said stacked structure (S) of said separator strip (NS) is being created is an end tract (TF) defined downstream of said outgoing orientation control device (R2) and upstream of a first constraint position (PV1) and/or a second constraint position (PV2) of said separator strip (NS) with respect to said stacking surface (10).

11. Apparatus (100) according to claim 10, wherein said feeding unit (20) comprises at least one tension control device, preferably a buffering element positioned at said accumulation tract (T).

12. Method (500) for creating a stacked structure (S), preferably for an electrochemical cell intended for producing batteries, said stacked structure (S) being made by folding a separator strip (NS), said method (500) comprising:
- arranging a feeding unit (20) configured to feed a separator strip (NS) along a feed path (PA), said feeding unit (20) comprising an outgoing orientation control device (R2) defining an outgoing reference direction (DRU) of said separator strip (NS),
- arranging a stacking unit (1) which comprises a stacking surface (10),
- arranging a handling unit (130) comprising:
∘ a first handling device (131) configured to displace said outgoing orientation control device (R2),
∘ a second handling device (132) configured to displace said stacking surface (10) along a second working path (P2),
- arranging a first and/or second release assembly of a sheet of foil (200, 300), comprised in said apparatus (100),
- performing an approaching movement (Mac) of said first and/or second release assembly of a sheet of foil (200, 300) with respect to said stacking surface (10) during a receiving tract (TR) of said second working path (P2), said approaching movement (Mac) being configured so as to produce a condition of substantially zero relative speed between said first and/or second release assembly of a sheet of foil (200, 300) and said stacking surface (10), so as to bring said first and/or second release assembly of a sheet of foil (200, 300) to a minimum release distance (DmR) from said stacking surface (10) on a portion of said separator strip (NS) at said stacking surface (10),
- releasing a first and/or second sheet of foil (201, 301) by means of said first and/or second release assembly of a sheet of foil (200, 300) at said minimum release distance (DmR) on said portion of said separator strip (NS) at said stacking surface (10).

13. Method according to the preceding claim, comprising stacking said separator strip (NS) over said stacking surface (10) while maintaining a first distance (D1) between said outgoing orientation control device (R2) and said stacking surface (10), measured according to said outgoing reference direction (DRU) of said separator strip (NS), comprised between 0 and 30 mm, more preferably between 0 and 15 mm, even more preferably substantially equal to 0 mm.

14. Method (500) according to any one of claims 12 to 13, comprising
▪ arranging an end tract (TF) of said separator strip (NS) oriented according to a deviation direction (DD), identifiable immediately downstream of said outgoing orientation control device (R2), and defining a deviation angle (β) with respect to said outgoing reference direction (DRU),
▪ mutually displacing by means of said handling unit (130) said outgoing orientation control device (R2) and/or said stacking surface (10), defining a second distance (D2) between said outgoing orientation control device (R2) and said stacking surface (10) so as to
- Reduce said second distance (D2) to the minimum when said deviation angle (β) is comprised between +80° and -80°, and/or
- Selectively extend said second distance (D2) when said deviation angle (β) is comprised between + 81° and +100° or - 81° and -100°.

15. Method (500) according to any one of claims 12 to 14, comprising releasing a first and a second plurality of said first and second sheets of foil (201, 301) respectively by interposing between each of them a folded tract of separator strip (NS) of said stacked structure (S).
